# EUROPÄISCHE PATENTSCHRIFT

(11) **EP 0 918 984 B1**
(45) Veröffentlichungstag und Bekanntmachung des Hinweises auf die Patenterteilung: **27.06.2001**
(21) Anmeldenummer: 97941922.3
(22) Anmeldetag: 08.08.1997
(51) Int. Cl.: G01N 21/55, G01N 21/25, G01N 33/53

(54) **OPTISCHE DETEKTIONSVORRICHTUNG**
OPTICAL DETECTOR
DISPOSITIF DE DETECTION OPTIQUE

(30) Priorität: 16.08.1996 CH 201796
(43) Veröffentlichungstag der Anmeldung: 02.06.1999
(73) Patentinhaber: Zeptosens AG, 4108 Witterswil (CH)
(72) Erfinder: DUVENECK, Gert, Ludwig, D-79189 Bad Krozingen (DE); GULDEN, Karlheinz, CH-8055 Zürich (CH); KUNZ, Rino, Ernst, CH-8162 Steinmaur (CH); SÖCHTIG, Jürgen, CH-8152 Opfikon (CH)
(74) Vertreter: Dannappel, Hans-Jochen
(86) Internationale Anmeldenummer: EP9704317
(87) Internationale Veröffentlichungsnummer: WO9808077

(56) Entgegenhaltungen:
- EP-A- 0 244 394
- EP-A- 0 718 621
- WO-A-91/10122
- DE-A- 4 207 431
- PATENT ABSTRACTS OF JAPAN vol. 018, no. 303 (P-1751), 9.Juni 1994 & JP 06 066721 A (YASUHIKO ARAKAWA;OTHERS: 02), 11.März 1994,

## Beschreibung

Die Erfindung betrifft eine optische Detektionsvorrichtung, insbesondere für chemische Analysen an kleinvolumigen Proben, mit wenigstens einer Lichtquelle zum Aussenden von Nachweislicht, wenigstens einer fotoelektrischen Nachweiseinheit zum Nachweis einer Lichtintensität und zur Umwandlung der Lichtintensität in ein entsprechendes elektrisches Signal, und wenigstens einer Meßzelle zur Aufnahme einer zu untersuchenden Probe, wobei zwischen der oder den Lichtquellen und der oder den fotoelektrischen Nachweiseinheiten ein oder mehrere an die wenigstens eine Meßzelle gekoppelte optische Wege gebildet werden.

Es ist seit langem bekannt, qualitative und quantitative chemische Analysen von Proben auf optischem Weg durchzuführen. Beispiele derartiger optischer Meßverfahren sind die Elektrophorese und die Chromatographie. Bei einer derartigen optischen Untersuchung einer Probe trifft von einer Lichtquelle ausgesendetes Nachweislicht auf die in einer Meßzelle vorhandene Probe. Das aus der Meßzelle austretende Licht wird von einer fotoelektrischen Nachweisvorrichtung detektiert. Bei der Wechselwirkung des Nachweislichts mit der Probe bzw. einem in der Probe enthaltenen Analyten kann, bei geeignetem Absorptionsspektrum des Analyten, Absorption des Nachweislichts auftreten und, sofern der Analyt beispielsweise durch geeignete Präparation mit einem Fluoreszenzmarker lumineszenzfähig ist, das absorbierte Nachweislicht vom Analyten in Form von Lumineszenz wieder emittiert werden.

Für die moderne biochemische Diagnostik besteht ein allgemeiner Trend, derartige optische Detektionsvorrichtungen zu miniaturisieren, um mit einem möglichst geringen Probenverbrauch auszukommen. Weiter werden die Proben in der Medizin und Biochemie oft hinsichtlich mehrerer verschiedener Analyten untersucht, so daß es im Zuge einer schnellen Bearbeitung erforderlich ist, möglichst sämtliche Analyten gleichzeitig qualitativ und gegebenenfalls quantitativ zu untersuchen.

Zur Untersuchung einer Probe hinsichtlich verschiedener Analyten ist es beispielsweise bekannt, die Probe mit einer entsprechenden Anzahl von Sensorschichten in Kontakt zu bringen, wobei die Sensorschichten selektiv mit chemischen oder biochemischen Erkennungselementen, die in der Sensorschicht immobilisiert sind, ausgestattet sind. Die Erkennungselemente umfassen dabei jeweils bestimmte Affinitätspartner des jeweiligen nachzuweisenden Analyten.

Für den optischen Nachweis eines bestimmten Analyten in der Probe ist es beispielsweise bekannt, den nachzuweisenden Analyten, der durch das für ihn empfindliche, auf der Sensorschicht immobilisierte Erkennungselement eingefangen wird, mittels eines Lumineszenzfarbstoffs zu markieren und die Lumineszenzstrahlung bzw. die Änderung der Lumineszenzstrahlung der Nachweisschicht, die aus dem Kontakt des Analyten und des Erkennungselements resultiert, als Meßgröße optisch zu erfassen.

Bei den optischen Sensorvorrichtungen kann dabei oft das Verfahren der evaneszenten Lumineszenzanregung verwendet werden. Bei diesem Verfahren wird Anregungslicht in einen Wellenleiter eingekoppelt, der von optisch dünneren Medien umgeben wird. Durch Totalreflexion an dem Übergang zwischen den Medien mit optisch unterschiedlicher Dichte wird das Anregungslicht in dem Wellenleiter geführt. Bei der Totalreflexion tritt jedoch das Anregungslicht eine kurze Strecke unter exponentieller Abnahme seiner Intensität in das angrenzende Medium ein, wobei dort das sog. evaneszente Feld erzeugt wird. Mit der evaneszenten Lichtintensität läßt sich eine an den Lichtwellenleiter unmittelbar angrenzende Probe zur Aussendung von Fluoreszenz anregen. Dabei wird auf dem Lichtwellenleiter die mit den immobilisierten Erkennungselementen versehene Sensorschicht aufgebracht, an der die strömungsfähige Probe vorbeigeleitet wird. Der Lichtwellenleiter ist bei derartigen optischen Sensorvorrichtungen vorteilhafterweise als planarer Lichtwellenleiter ausgestaltet. Ein derartiger planarer Lichtwellenleiter kann einerseits integraler Bestandteil der Flußzelle sein und beispielsweise als Deckplatte des Flußkanals dienen, andererseits läßt er sich durch bekannte Ablagerungsverfahren einfach und für die Massenproduktion geeignet herstellen.

Bei einer großen Zahl von zu untersuchenden Analyten ist es zweckmäßig, die einzelnen biochemischen Sensorelemente in einem Feld (array) anzuordnen. Diesem Feld aus Sensorelementen wird jeweils eine Lichtquelle und mindestens eine Lichtnachweisvorrichtung zugeordnet. Um die Anforderungen an die kleine Bauart der optischen Detektionsvorrichtung zu erfüllen, wird deshalb auf einzelne kantenemittierende Halbleiterlaser und übliche Halbleiterfotodetektoren zurückgegriffen. Eine solche Vorrichtung umfaßt beispielsweise ein Feld von auf der Oberfläche eines Substrats angebrachten kantenemittierenden Halbleiterlasern, deren Emissionslicht jeweils in zugeordnete Wellenleiter eingekoppelt wird. Die Wellenleiter, die die Wechelswirkungsstrecke mit der Probe bilden, stehen mit den Sensorschichten in Kontakt, die mit für die jeweiligen Analyten spezifischen Erkennungselementen versehen sind. Über Auskoppelvorrichtungen ist das Licht nach Passieren der Wechselwirkungsstrecke auf die Nachweisfläche von jeweils zugeordneten Halbleiterfotodetektoren leitbar.

Die kantenemittierenden Halbleiterlaser werden jedoch in der Regel nicht auf demselben Substrat hergestellt wie die Halbleiterfotodetektoren. Da kantenemittierende Halbleiterlaser gemäß der üblichen Fertigungstechnologie parallel zur Oberfläche des Substrats Licht emittieren, ist es entweder erforderlich, eine Seitenkante eines Laserelements innerhalb des Substrats beispielsweise durch Ätzen eines Grabens freizulegen und das emittierte Licht über Umlenkungen aus der Tiefe des Substrats herauszuführen, oder die Lasereinheit aus dem Substrat herauszubrechen. Da die angesprochenen Umlenkungen nur sehr schwierig herstellbar sind, werden meistens kantenemittierende Halbleiterlaserelemente aus dem Substrat herausgebrochen und auf dem die Halbleiterfotodetektoren enthaltenden Fremdsubstrat in der gewünschten Emissionsrichtung angebracht. Trotz dieser erheblichen Einschränkungen durch den hohen, teilweise nicht zu automatisierenden Arbeitsablauf bei der Herstellung von solchen Detektoranordnungen, sind die kantenemittierenden Laser im Vergleich zu anderen Lasersystemen, wie Helium-Neon-Lasern, konkurrenzlos im Hinblick auf ihren Platzbedarf und auch ihre Umwandlungseffizienz von elektrischer Energie in optische Energie, die bei kantenemittierenden Halbleiterlasern wesentlich über der z.B. eines Helium-Neon-Lasers liegt.

Diese bekannten Vorrichtungen weisen jedoch den Nachteil auf, daß der zunehmenden Miniaturisierung darin Schranken gesetzt sind, daß selbst bei Verwendung von kantenemittierenden Halbleiterlasern, die von ihrem Muttersubstrat getrennt und auf ein fremdes Substrat aufgebracht wurden, ein Flächenverbrauch für den kantenemittierenden Halbleiterlaser bei typisch von 300 x 100 µm² liegt. Aufgrund der Notwendigkeit, den kantenemittierenden Halbleiterlaser aus dem Muttersubstrat herauszutrennen und in einer geeigneten Ausrichtung auf einem Fremdsubstrat zu befestigen, ist der Herstellungsprozeß einer gattungsgemäßen optischen Detektionsvorrichtung schwierig und zeitaufwendig und erfordert Handarbeit, was einen wesentlichen Kostenbeitrag für die optische Detektionsvorrichtung ergibt.

In der EP-A-0 718 621 ist eine Detektionsvorrichtung zur Bestimmung einer Vielzahl von Benzingasmischungen mit einer Vielzahl von Sensoren, Lichtquellen und Nachweiseinheiten für Licht offenbart, die alle entlang eines Kanals zum Transport der Gase angeordnet sind, in der als Lichtquellen solche mit IR-Strahlung oder sichtbarem Licht verwendet werden können, zum Beispiel Halbleiterlaser oder Photodioden.

In der DE-A-4 207 431 wird eine Sensoranordnung mit in einer Ebene angeordneten fotoelektrischen Sendern und Empfängern beschrieben, die als monolithische, galvanisch nicht entkoppelte optoelektronische Sender/Empfängerstruktur in beziehungsweise auf einem Halbleitersubstrat ausgebildet ist. Dabei ist die Oberfläche der monolithisch ausgebildeten pn-Übergänge der Senderelemente unterhalb denen der Empfängerelemente angebracht.

In der JP-A-06 066721 wird ein einzelnes Sensorelement zur Bestimmung von Substanzen beschrieben, das aus einem kantenemittierenden Halbleiterlaser als Sender und einer Photodiode als Empfänger besteht, die auf dem gleichen Halbleitersubstrat integriert sind. Die Substanz befindet sich in direktem Kontakt mit der lichtemittierenden Oberfläche des Halbleiterlasers konventioneller Bauart. Eine Verfielfältigung des Sensorfeldes ist nicht angesprochen.

In der EP-A-0 244 394 wird ein Sensorelement im Kontakt mit einem optischen Wellenleiter zur Messung von Stoffkonzentrationen beschrieben, bei dem ein fotoempfindliches Element in einer planaren Anordnung integriert ist und als Sender ausserhalb dieser Anordnung befindliche Lichtquellen verwendet werden. Es wird auch vorgeschlagen, für eine Miniaturisierung fotoempfindliche Elemente und lichtemittierende Quellen zu Sensorfeldern auf einem Halbleitersubstrat zu integrieren, wobei als Lichtquellen Dioden- und Dünnschichtstrukturen (Elektrolumineszens) angegeben sind. Die photoempfindliche Schicht steht direkt oder über Zwischenschichten in Kontakt mit einer Indikatorschicht, deren optische Eigenschaften sich in Gegenwart eines Analyten verändern. Eine solche Anordnung ist nicht einsetzbar für Anwendungen, in denen ein Übergang von einer Messung zur nächsten möglich ist. Das analytspezifische Sensorelement ist daher nur für den Einmalgebrauch ausgelegt.

In der EP-A-0 445 488 wird ein Array von kantenemittierenden Laserdioden auf einem gemeinsamen Substrat beschrieben. Um eine Abstrahlung des Arrays senkrecht zur gemeinsamen Substratoberfläche zu erzielen, sind zusätzlich für jede einzelne Laserdiode Spiegel auf dem Substrat integriert. Um auf diese Weise ein definiertes Abstrahlungsprofil des Arrays zu erzielen, ist jedoch eine ausserordentlich hohe Präzision in der Anordnung der Spiegel erforderlich, so dass eine solche Anordnung in der Herstellung sehr aufwendig ist.

In der US-A-4 949 350 wird ein senkrecht zur Oberfläche des Substrats emittierender Halbleiterlaser (VCSEL's) beschrieben. Es finden sich jedoch weder Hinweise auf die Geometrie entsprechender Array-Anordnungen noch auf die Integration solcher Lichtquellen-Arrays in bioanalytische Meßsysteme.

In der US-A-5 073 041 wird eine Anordnung von mehreren senkrecht zur Oberfläche des Substrats emittierender Halbleiterlasern offenbart, wobei jedem Laserelement eine Fresnellinse zugeordnet und in der Substratoberfäche integriert ist, um die Divergenz der erzeugten Laserstrahlen zu verringern. Es wird jedoch kein Hinweis gegeben, wie eine solche Anordnung mit einer Meßanordnung zur Multianalytbestimmung, wie beispielsweise einem Biosensor-Array, kombiniert werden könnte, insbesondere wie zu erwartende große Unterschiede zwischen dem Abstand (Pitch) der einzelnen VCSEL's und der von ihnen emittierten Einzelstrahlen auf dem Lichtquellenarray und den entsprechenden Abständen individueller Meßfelder auf einem Sensorarray kompensiert werden können.

Es ist daher die Aufgabe der Erfindung, eine optische Detektionsvorrichtung für chemische Mehrfach-Analysen, vorzugsweise an kleinvolumigen Proben bereitzustellen, die eine verringerte minimale Baugröße aufweist und deren Herstellungsprozeß vereinfacht ist.

Gegenstand der Erfindung ist eine optische Detektionsvorrichtung für chemische Mehrfach-Analysen, insbesondere an kleinvolumigen Proben, mit einer Vielzahl von Lichtquellen zum Aussenden von Nachweislicht,
einer entsprechenden Vielzahl von fotoelektrischen Nachweiseinheiten, die jeweils einer entsprechenden Lichtquelle zugeordnet sind, zum Nachweis einer Lichtintensität und zur Umwandlung der Lichtintensität in ein entsprechendes elektrisches Signal, und
wenigstens einer Meßzelle zur Aufnahme einer zu untersuchenden Probe,
wobei zwischen den Lichtquellen und den fotoelektrischen Nachweiseinheiten mehrere an die wenigstens eine Meßzelle gekoppelte optische Wege gebildet werden, dadurch gekennzeichnet, daß
die Lichtquellen eine Vielzahl oberflächenemittierender Halbleiterlaser auf einem gemeinsamen Substrat, oder wenigstens eine Zeilenanordnung von auf einem gemeinsamen Substrat hergestellten kantenemittierenden Halbleiterlasern sind, und die optischen Wege an Meßzellen gekoppelte Wellenleiter umfaßen.

Der oberflächenemittierende Laser gemäß der erfindungsgemäßen optischen Detektionsvorrichtung besitzt beispielsweise bei gängigen Ausführungsformen eine Größe von ca. 10 x 10 µm auf dem Substrat, so daß dadurch der Flächenverbrauch gegenüber einem handelsüblichen Halbleiterlaser, wie eingangs genannt, um einen Faktor von etwa 1:300 verringert werden kann. Weiter besitzt ein oberflächenemittierender Laser einen geringeren Leistungsverbrauch, da die Schwellströme in diesem Bauelement um etwa eine Größenordnung geringer sind als bei konventionellen kantenemittierenden Laserdioden. Insbesondere bei einer Feldanordnung von sehr vielen erfindungsgemäßen Detektionsvorrichtungen auf einem einzigen Substrat führt dies zu spürbaren Erleichterungen im Hinblick auf die Anforderungen an die Kühlung der Laserelemente.

Der oberflächenemittierende Laser weist gegenüber dem bekannten kantenemittierenden Laser in einer optischen Detektionsvorrichtung den Vorteil auf, daß durch das symmetrische und gaußförmige Strahlprofil des oberflächenemittierenden Lasers eine verbesserte Strahlführung und Strahlausnutzung in den nachfolgenden optischen Elementen möglich ist. Während die kantenemittierenden Halbleiterlaser in der Regel eine elliptische Strahlgeometrie mit unterschiedlichen und relativ hohen Divergenzen im Bereich von bis zu 30° aufweisen, bietet der oberflächenemittierende Halbleiterlaser eine wesentlich verbesserte Strahlqualität mit einer sehr geringen Divergenz von nur ca. 5° Halbwinkel, so daß kleinere und einfachere optische Elemente verwendbar sind.

Die oberflächenemittierenden Halbleiterlaser lassen sich einfach und kostengünstig mittels bekannter Herstellungsverfahren unter Verwendung von Molekularstrahlepitaxie- oder metallorganischen Dampfphasenepitaxieverfahren als prozeß- und produktangepaßte Stapel von Schichten unterschiedlicher Stöchiometrie abscheiden. Weiter können Schaltungen zur Ansteuerung der oberflächenemittierenden Laser und andere elektrische Bauelemente, wie auch die fotoelektrischen Detektoren, auf ein- und demselben Substrat gefertigt werden. Damit entfallen die bisherigen umständlichen und zeitaufwendigen, von Hand auszuführenden Vorgänge des Vereinzelns, Ausrichtens und Aufbringens der kantenemittierenden Halbleiterlaser in der gewählten Feldgeometrie auf einem Fremdsubstrat. Vielmehr ermöglicht es die Verwendung der oberflächenemittierenden Halbleiterlaser die zu hoher Präzision gereifte Technologie für die Fertigung integrierter Schaltkreise zu übernehmen. Schließlich weisen die oberflächenemittierenden Halbleiterlaser noch den weiteren Vorteil einer Wellenlängenabstimmung in Abhängigkeit von ihrem Treiberstrom auf, ohne Auftreten von longitudinalen Modensprüngen.

Bei der Herstellung von einer Vielzahl von oberflächenemittierenden Halbleiterlasern auf einem gemeinsamen Substrat kann auf die äußerst präzisen Verfahren bei der Fertigung von integrierten Halbleiterschaltungen zum Ausrichten der einzelnen Lichtquellen zueinander zurückgegriffen werden. Insbesondere weisen die oberflächenemittierenden Halbleiterlaser eine Fläche von ca. 100 µm² auf dem Substrat auf, so daß eine massive Erhöhung der Anordnungsdichte der Lichtquellen auf dem Substrat um einen Faktor von ca. 1:300 gegenüber Anordnungen mit kantenemittierenden Lasern möglich ist. Damit wird einerseits eine Miniaturisierung der optischen Detektionsvorrichtung und weiter eine Ausweitung zu einer erhöhten Anzahl von gleichzeitig untersuchbaren Analyten ermöglicht.

Weiter ist es im Rahmen der vorliegenden Erfindung besonders vorteilhaft, die oberflächenemittierenden Halbleiterlaser zur Emission von sichtbarem Licht geeignet auszulegen, da damit neben den Absorptionsmessungen auch der Bereich der Fluoreszenzanalyse zugänglich ist. Aufgrund der Abstimmbarkeit der oberflächenemittierenden Halbleiterlaser in Abhängigkeit vom Ansteuerungsstrom ist über einen Wellenlängenbereich von einigen Nanometern eine Absorptions- und Fluoreszenzspektroskopie möglich. Aufgrund der kurzen Resonatorlänge des oberflächenemittierenden Halbleiterlasers sind Sprünge in der longitudinalen Mode des emittierten Laserlichts im Gegensatz zu den herkömmlichen kantenemittierenden Laserdioden ausgeschlossen, wodurch die Zuverlässigkeit der Abtastung des zugänglichen Wellenlängenbereichs wesentlich erhöht ist.

In besonders vorteilhafter Weise ist in der erfindungsgemäßen optischen Detektionsvorrichtung der oberflächenemittierende Halbleiterlaser derart aufgebaut, daß sich in den Bragg-Spiegeln des oberflächenemittierenden Halbleiterlasers die Konzentration der stöchiometrischen Zusammensetzung von nebeneinanderliegenden Schichten des Mehrschichtaufbaus auf kontinuierliche, insbesondere lineare Weise ändert. Durch diese lineare Abstufung der Konzentrationsübergänge zwischen den Schichten, die auch "grading" genannt wird, wird der elektrische Verlustwiderstand des oberflächenemittierenden Halbleiterlasers für den Ansteuerungsstrom verringert. Daher tritt eine geringere, in Wärme umgewandelte Verlustleistung auf, so daß einerseits ein höheres Umwandlungsverhältnis der elektrischen Leistung in Lichtleistung erzielbar ist und andererseits das bisher bekannte Problem der Aufheizung des Substrats bei gleichzeitigem Betrieb von vielen, auf dem gleichen Substrat integrierten oberflächenemittierenden Halbleiterlasern verringert wird.

Weiter ist es in der erfindungsgemäßen optischen Detektionsvorrichtung vorteilhaft, daß der oberflächenemittierende Halbleiterlaser auf dem Substrat in seiner lateralen Dimension durch eine Mesaätzung definiert ist, wobei insbesondere die Oberfläche und die Flanken des mesageätzten oberflächenemittierenden Halbleiterlasers unter Freilassung eines Emissionsfensters für die vertikal zur Substratoberfläche gerichtete Lichtemission mit einer Metallschicht bedeckt ist. Diese Metallschicht, die gleichzeitig als metallischer Anschluß an den oberflächenemittierenden Halbleiterlaser zur Bereitstellung des Ansteuerungsstroms dient, bewirkt durch ihre Ausdehnung über die gesamte Mesastruktur eine verbesserte Wärmeableitung, so daß der oberflächenemittierende Halbleiterlaser bei höheren Ansteuerungsströmen betreibbar ist und somit eine höhere maximale Lichtausgangsleistung erzielbar ist.

Die weiter oben genannte, der vorliegenden Erfindung zugrundeliegende Aufgabe wird erfindungsgemäß auch durch eine optische Detektionsvorrichtung gelöst, in der die Vielzahl von Lichtquellen wenigstens eine Zeilenanordnung kantenemittierender Halbleiterlaser auf einem gemeinsamen Substrat umfaßt. Diese erfindungsgemäße Lösung der Aufgabe weist den Vorteil auf, daß die Halbleiterlaser als Zeilen-Arrays hergestellt und in der optischen Detektionsvorrichtung eingebaut werden, wodurch die einzelnen Halbleiterlaserelemente innerhalb der Zeile aufgrund der fotolithographischen Herstellungsverfahren sehr exakt zueinander ausgerichtet sind. Weiter ist das nach dem Stand der Technik übliche mühsame Vereinzeln und separate Anbringen einzelner Halbleiterelemente auf einem Fremdsubstrat in dieser erfindungsgemäßen Lösung wesentlich vereinfacht und rationalisiert, da die kantenemittierenden Halbleiterlaser in einem einzigen Vereinzelungsschritt zeilenweise als einstückige Elemente mit 100 und mehr integrierten kantenemittierenden Lasern gebildet werden.

Weiter ist es vorteilhaft, daß die Halbleiterlaser, die fotoelektrische Nachweiseinheit und die an die wenigstens eine Meßzelle gekoppelten optischen Wege jeweils auf einem ersten, zweiten und dritten, jeweils im wesentlichen planaren Substrat vorgesehen sind. Insbesondere können das erste, zweite und dritte Substrat übereinander gestapelt sein. Diese Stapelstruktur ermöglicht einen modularen Aufbau der optischen Detektionsvorrichtung unter einfacher und präziser Ausrichtung der Lichtquellen, der fotoelektrischen Nachweiseinheiten und der Meßzellen zueinander. Durch diesen modularen Aufbau ist es möglich, die Meßzellen von einer zur nächsten Messung einfach und problemlos gegen einen Satz neuer Meßzellen auszutauschen, wenn durch einen Meßvorgang der an den Sensorschichten der Meßzellen immobilisierte Erkennungsstoff verbraucht ist. Damit lassen sich auch Kosteneinsparungen im Meßvorgang erzielen, da die Lichtquellenanordnung und die Anordnung der optischen Fotodetektoren wiederverwendbar ist, und der Zusammenbau der erfindungsgemäßen optischen Detektionsvorrichtung ohne großen Aufwand und in der Regel ohne die Notwendigkeit spezieller Verfahren in der alltäglichen Praxis möglich ist. Die verschiedenen Substrate weisen vorteilhafterweise durch Selbstausrichtverfahren gefertigte Justierstrukturen oder -marken auf. Die genannten Selbstausrichtverfahren beinhalten beispielsweise eine Verwendung identischer Masken bei einem lithographischen Herstellungsverfahren der Justierstrukturen oder -marken.

In der erfindungsgemässen Detektionsvorrichtung umfaßt jeder optische Weg einen an die wenigstens eine Meßzelle gekoppelten Wellenleiter. Der an die Meßzelle gekoppelte Wellenleiter ist vorteilhafterweise ein monomodaler oder nur wenige Moden führender Wellenleiter und/oder ein Wellenleiter mit sehr hohem Brechungsindex, der beispielsweise durch Metalloxide, insbesondere Titandioxid und Tantalpentoxid, verwirklicht wird. Zur Bildung eines chemischen Sensors ist an dem Wellenleiter eine chemische Beschichtung aufgebracht. Die monomondalen oder nur wenige Moden führenden Wellenleiter zeichnen sich durch eine besonders hohe Empfindlichkeit bei kleinstmöglicher Bauweise aus. In der Regel wird diese Empfindlichkeit von vielmodigen Wellenleitern planarer Bauart nicht erreicht.

Vorteilhafterweise sind wenigstens zwei planare, getrennte, vorzugsweise anorganische dielektrische Wellenleiter auf einem gemeinsamen Trägermaterial zur Bildung einer Sensorplattform ausgebildet. Eine derartige Sensorplattform, die ideal zur Verwendung mit einem integrierten oder hybriden Halbleiterlaser und Fotodetektor-Array geeignet ist, ermöglicht eine parallele evaneszente Anregung und Detektion der Lumineszenz gleicher oder unterschiedlicher Analyten. Die getrennten Wellenleiter können dabei je ein oder mehrere Koppelgitter enthalten.

Ein wesentlicher Vorteil der Sensorplattform besteht darin, daß beispielsweise gleichzeitig mehrere Probenlösungen mit hoher Empfindlichkeit analysierbar sind. Wasch- oder Reinigungsschritte zwischen den einzelnen Messungen entfallen, so daß ein hoher Probendurchsatz pro Zeiteinheit erreicht wird. Dies ist insbesondere für Routineuntersuchungen oder im Bereich gentechnologischer Bestimmungen von großer Bedeutung.

Neben der gleichzeitigen Untersuchung von mehreren Probenlösungen kann auch eine Probenlösung auf mehrere in ihr enthaltene Analyten gleichzeitig oder nacheinander auf einer derartigen Sensorplattform untersucht werden. Dies ist besonders vorteilhaft bei Blut- oder Serumuntersuchungen, die so besonders schnell und wirtschaftlich durchführbar sind. Werden mehrere Probenlösungen gleichzeitig analysiert, verhindern die getrennten Wellenleiter ein Übersprechen von Lumineszenzsignalen verschiedener Proben. Man erreicht mit diesem Verfahren eine hohe Selektivität und geringe Fehlerraten.

Die genannte Sensorplattform weist weiter einen Vorteil darin auf, daß die einzelnen getrennten Wellenleiter optisch, chemisch oder fluidisch selektiv adressierbar sind.

Weitere vorteilhafte Ausführungsformen gehen aus den Unteransprüchen hervor.

Nachfolgend wird die Erfindung anhand vorteilhafter Ausführungsbeispiele näher erläutert und beschrieben.

In einem ersten Ausführungsbeispiel kommt das allgemeine Prinzip einer erfindungsgemäßen Detektionsvorrichtung zum Ausdruck.

In einem Gehäuse ist auf einem Träger, der Bestandteil des Gehäuses sein kann, eine fotoelektrische Nachweiseinheit, z.B. in Form einer an sich bekannten Fotodiode, und ein als Lichtquelle dienender oberflächenemittierender Halbleiterlaser angebracht. Der Fotodiode und dem oberflächenemittierenden Halbleiterlaser liegt ein in dem Gehäuse vorgesehener Wellenleiter gegenüber, an dessen von der Fotodiode und dem oberflächenemittierenden Laser abgewandten Oberfläche eine Sensorschicht vorgesehen ist. Der Wellenleiter ist auf einem Substrat vorgesehen, das zugleich eine Trennwand innerhalb des Gehäuses darstellen kann, wodurch ein als Probenvolumen dienender Raum innerhalb des Gehäuses gebildet wird. Zwischen dem Wellenleiter und dem Substrat kann eine Zwischenschicht vorgesehen sein, die z.B als Haftvermittlungsschicht dient zur Verbesserung der Haftung eines Wellenleiters beispielsweise aus Metalloxid auf einem organischen Substrat. Die Zwischenschicht kann aber auch als Trennschicht wirken zur Trennung des Wellenleiters vom Substrat, um eine Anregung von parasitärer Fluoreszenz im evaneszenten Feld des Wellenleiters (insbesondere bei einem Substrat aus Kunststoff) zu verhindern. Weiter kann zwischen dem Wellenleiter und der Sensorschicht eine spezielle Haftvermittlungsschicht vorgesehen sein.

In den Meßraum führt ein Einlaßkanal und ein Auslaßkanal, durch die die zu untersuchenden Fluidproben durch den Meßraum und an der Sensorschicht vorbei zirkulierbar sind. Die Sensorschicht kann mit an der Sensorschicht immobilisierten Erkennungselementen versehen sein, die mit einem bestimmten, in der Probe nachzuweisenden Analyten wechselwirken, beispielsweise indem sie den Analyten an sich binden.

Durch das Gehäuse wird eine Meßzelle bestimmt, an die der Wellenleiter durch das evaneszente Feld des sich durch den Wellenleiter ausbreitenden Anregungslichts gekoppelt ist. Eine andere Möglichkeit zur Bildung eines an diese Meßzelle gekoppelten optischen Wegs besteht in einer Volumendetektion, wenn sich die Lichtemissions- und Lichtnachweisvorrichtungen an gegenüberliegenden Seiten der Meßzelle gegenüberstehen. Eine (quasi) Volumendetektion ist mit Verwendung eines Wellenleiters möglich, wenn die gesamte im evaneszenten Feld des Wellenleiters erzeugte und isotrop abgestrahlte Lumineszenzstrahlung von den Fotodetektoren nachgewiesen wird. In diesem Fall wäre zur Aussonderung gestreuter Anregungsstrahlung ein Filter über den Fotodetektoren vorzusehen.

Die zu untersuchende Probe kann sowohl stationär mit der auf dem Wellenleiter vorgesehenen Sensorschicht in Kontakt gebracht werden, als auch kontinuierlich über sie geleitet werden, wobei der Kreislauf offen oder geschlossen sein kann.

Der Wellenleiter weist an einer dem oberflächenemittierenden Halbleiterlaser gegenüberliegenden Position ein Einkoppelgitter auf, das eine von dem oberflächenemittierenden Halbleiterlaser ausgesandte Strahlung zur Einkopplung in den Wellenleiter beugt, so daß sich in bevorzugter Weise nur eine oder wenige Moden in dem Wellenleiter ausbreiten. Das sich in dem Wellenleiter ausbreitende Licht weist vorzugsweise eine Divergenz von weniger als 5° auf.

An einer der Fotodiode gegenüberliegenden Stelle wird über ein Auskoppelgitter das Licht aus dem Wellenleiter ausgekoppelt und in eine im wesentlichen senkrecht zur Oberfläche des Wellenleiters verlaufende Richtung gebeugt. Ein ausgekoppelter Strahl wird dann von der Fotodiode empfangen.

Das Einkoppelgitter und das Auskoppelgitter können auf jede beliebige konventionelle Weise hergestellt sein, beispielsweise durch dem Fachmann bekannte Verfahren wie Einritzen, Ätzen oder Prägen von Gittern in das Substrat, die sich konform über die Zwischenschicht auf den Wellenleiter übertragen. Ebenso ist die Anbringung und Herstellung der Sensorschicht dem Fachmann geläufig.

Im einfachsten Fall könnte der Wellenleiter nur aus einem Glasplättchen bestehen, das gleichzeitig die Rolle des Substrats übernimmt.

Das Meßverfahren der beispielhaft beschriebenen Vorrichtung beruht auf der Wechselwirkung der evaneszenten Lichtintensität mit der Sensorschicht.

Die eigentliche Messung kann unter kontinuierlicher Einstrahlung des Anregungslichts im "continuous-wave"(cw)-Betrieb durchgeführt werden, d.h. vorzugsweise unter Anregung mit zeitlich konstanter Lichtintensität. Andererseits kann die Messung aber auch unter Einstrahlung von Anregungslicht in Form von zeitlichen Impulsen mit einer Pulsdauer von beispielsweise einer Pikosekunde bis zu 100 Sekunden durchgeführt werden, womit die Lumineszenz zeitlich aufgelöst (im Falle kurzer Pulsdauer) oder in Intervallen von Sekunden bis zu Minuten detektierbar ist. Dieses Verfahren ist besonders dann vorteilhaft, wenn man z.B. die Geschwindigkeit einer Bindungsbildung analytisch verfolgen oder eine Lumineszenzsignalabnahme infolge fotochemischen Ausbleichens mittels kurzer Belichtungszeiten verhindern will. Weiterhin ist bei Verwendung einer entsprechenden kurzen Pulsdauer und einer geeigneten Zeitauflösung der Detektion die Diskriminierung von Streulicht, Ramanemission und kurzlebiger Lumineszenz möglicherweise vorhandener, unerwünschter lumineszierender Bestandteile der Probe und des Sensormaterials gegenüber einer in diesem Fall möglichst langlebigen Lumineszenz des Markierungsmoleküls möglich, indem die Emission des Analyten erst nach Abklingen der kurzlebigen Strahlung detektiert wird. Darüber hinaus erlaubt eine zeitaufgelöste Lumineszenzdetektion nach gepulster Anregung ebenso wie eine modulierte Anregungsdetektion die Untersuchung des Einflusses der Bindung des Analyten auf das molekulare Lumineszenzabklingverhalten. Die molekulare Lumineszenzabklingzeit kann neben der spezifischen Analyterkennung durch die immobilisierten Erkennungselemente und der räumlichen Beschränkung der Signalerzeugung auf das evaneszente Feld des Wellenleiters als ein weiteres Selektivitätskriterium benutzt werden. Das Anregungslicht kann auch bei einer oder mehreren Frequenzen intensitätsmoduliert werden, wobei die resultierende Phasenverschiebung und Modulation der Probenlumineszenz detektiert wird.

Die erfindungsgemäße Vorrichtung ist auch zur selektiven, quantitativen Bestimmung lumineszierender Bestandteile in optisch trüben Flüssigkeiten geeignet. Optisch trübe Flüssigkeiten können z.B. biologische Flüssigkeiten, wie Eigelb, Körperflüssigkeiten, wie Blut, Serum oder Plasma sein, aber auch Proben aus der Umweltanalytik, wie beispielsweise Oberflächenwasser, gelöste Erdextrakte oder gelöste Pflanzenextrakte. In Frage kommen auch Reaktionslösungen, wie sie beispielsweise bei der chemischen Produktion anfallen, insbesondere Farbstofflösungen oder Reaktionslösungen von optischen Aufhellern. In Frage kommen auch alle Arten von Dispersionen oder Zubereitungen, wie sie z.B. in der Textilindustrie eingesetzt werden, sofern diese eine oder mehrere lumineszierende Komponenten enthalten. Aufgrund der Reversibilität der Affinitätskomplexbildung als Gleichgewichtsprozeß ist unter Anwendung geeigneter Flußraten in dem Durchflußsystem die Bindung oder Desorption bzw. Dissoziation gebundener, lumineszenzmarkierter Affinitätspartner im evaneszenten Feld in Echtzeit verfolgbar. Daher eignet sich die erfindungsgemäße Vorrichtung auch für kinetische Studien zur Bestimmung unterschiedlicher Assoziations- oder Dissoziationskonstanten oder auch für Verdrängungsassays.

Nachfolgend wird ein oberflächenemittierenden Halbleiterlaser, der zur Verwendung in der erfindungsgemäßen optischen Detektionsvorrichtung geeignet ist, näher beschrieben. Der oberflächenemittierende Halbleiterlaser ist auf einem Substrat, das einen Rückseitenmetallkontakt aufweist, ausgebildet. Der oberflächenemittierende Halbleiterlaser umfaßt einen aktiven Bereich, einen aus einer Vielzahl von Schichten aufgebauten rückseitigen Resonatorspiegel und einen ebenfalls aus einer Vielzahl von Schichten aufgebauten oberflächenseitigen Resonatorspiegel. An der Oberfläche der Struktur ist eine metallische Kontaktierungsschicht, durch die der Ansteuerungsstrom geleitet wird, vorgesehen. Mit Ausnahme eines kleinen Endbereichs in der Nähe eines Laseremissionslichtfensters liegt unter der Metallschicht eine isolierende Schicht, die beispielsweise aus Siliziumnitrit (Si₃N₄) gebildet ist.

Zur lateralen Eingrenzung des von der Metallschicht im Bereich des Lichtaustrittsfensters in den Schichtstapel eintretenden Ansteuerungsstrom, der zur Rückseitenelektrode fließt, ist eine säulenartige Struktur wenigstens im Bereich des oberflächenseitigen Resonatorspiegels vorgesehen. Anstelle dieser säulenartigen Struktur, die auch als Mesastruktur bezeichnet wird, ist es auch möglich, eine Sperrimplantation mit Wasserstoffionen in den Bereichen seitlich neben dem aktiven Laserbereich durchzuführen.

Das Substrat besteht vorzugsweise aus mit Siliziumionen n+ implantiertem Galliumarsenid. Der rückseitige Spiegel ist vorzugsweise ein Vielschichtinterferenzspiegel, auch Bragg-Spiegel genannt, mit beispielsweise 40 Schichtfolgen aus AlAs und Al_{0,3}Ga_{0,7}As, die ebenfalls n-dotiert sind. Zur optimalen Reflexion weist jede Schicht eine optische Dicke von λ/4 auf. Bei einer Emissionswellenlänge von 765 nm besitzt somit die Al_{0,3}Ga_{0,7}As-Schicht eine Dicke von 55 nm und die AlAs-Schicht eine Dicke von 63 nm. Der aktive Bereich umfaßt eine Schicht mit der Dicke einer ganzen Wellenlänge aus Al_{03,}Ga_{0,7}As, in der, vorzugsweise in der Nähe ihrer Mitte und leicht versetzt dazu, drei 8 nm dicke Schichten Al_{0,12}Ga_{0,88}As, die durch 6 nm breite Barrieren getrennt sind, zur Bildung von Potentialtöpfen vorgesehen sind. Der oberflächenseitige Spiegel umfaßt wiederum einen Schichtstapel zur Bildung eines teilreflektierenden Interferenzspiegels bei der Emissionswellenlänge des oberflächenreflektierenden Lasers. Beispielsweise kann der oberflächenseitige Spiegel aus 25 Schichtfolgen aus Al_{0,3}Ga_{0,7}As und AlAs bestehen. Bei einer Emissionswellenlänge von 765 nm ist die Dicke der AlAs-Schicht wieder 63 nm und die Dicke der Al_{0,3}Ga_{0,7}As-Schicht 55 nm.

Der Übergang in der stöchiometrischen Zusammensetzung der aneinander angrenzenden Schichten des oberflächenseitigen und rückseitigen Bragg-Spiegels ist vorzugsweise kontinuierlich, und weist in seiner einfachsten und praktischsten Form einen linearen Übergang auf. Durch die kontinuierliche lineare Veränderung der stöchiometrischen Zusammensetzung von einer Schicht zur nächsten in den Schichtstapeln der beiden Bragg-Reflektoren wird der elektrische Verlustwiderstand für den Ansteuerungsstrom, der senkrecht zu den Schichtstapeln von der Metallschicht zu dem Rückseitenkontakt fließt, drastisch verringert, so daß ein höherer Wirkungsgrad und eine höhere optische Ausgangsleistung erzielt wird.

Zur Schaffung eines hohen Wirkungsgrads und einer hohen optischen Lichtausgangsleistung trägt weiter der Metallfilm für die Bereitstellung des Ansteuerungsstroms bei, der über die Flanken der Mesastruktur ausgedehnt ist. Dabei ist es günstig, wenn die Mesastruktur möglicht weit in das Substrat zurückgeätzt ist und die Flanken der Mesastruktur in allen Richtungen möglichst vollständig mit dem Metallfilm bedeckt sind. Vorzugsweise besteht der Metallfilm aus Gold. Durch die möglichst vollständige Bedeckung der Flanken der Mesastruktur mit dem Metallfilm wird eine optimale Abfuhr der die optische Ausgangsleistung begrenzenden Wärme in dem oberflächenemittierenden Halbleiterlaser erzielt. Eine weitere Maßnahme zur Verbesserung der optischen Ausgangsleistung des oberflächenemittierenden Halbleiterlasers besteht in einem möglichst guten Einschluß des Stroms in einem Bereich senkrecht unter dem Lichtaustrittsfenster, so daß alle strahlenden Rekombinationsvorgänge innerhalb des aktiven Bereichs im wesentlichen unter dem Lichtaustrittsfenster stattfinden. Dadurch werden Strahlungsverluste durch Absorption in der Siliziumnitritschicht und der darüberliegenden Metallschicht weitgehend vermieden. Dieser laterale Stromeinschluß läßt sich durch Mesaätzen und zusätzliches selektives Oxidieren oder selektives laterales Ätzen optimieren. Bei derartigen oberflächenemittierenden Halbleiterlasern sind Umwandlungsverhältnisse von elektrischer zu optischer Leistung von bis zu 50 % bei einer Emissionswellenlänge von 980 nm realisiert werden.

Da der oberflächenemittierende Halbleiterlaser eine Resonatorlänge, die der aktiven Zone entspricht, von der Länge einer Wellenlänge aufweist, kann nur eine longitudinale Mode des Lasers anschwingen. Außerdem ist das Strahlprofil aufgrund des kreisförmig gestalteten Lichtaustrittfensters ebenfalls kreisförmig und weist über den Querschnitt ein Gauß-Profil auf. Zudem beträgt die Divergenz des aus dem Lichtaustrittsfenster emittierten Laserlichts nur ca. 5° im Halbwinkel. Aufgrund dieser mit dem oberflächenemittierenden Halbleiterlaser erzielbaren Eigenschaften des Emissionslichts ist eine wesentlich bessere Strahlführung und Einkopplung in den mit der Sensorschicht versehenen Wellenleiter möglich. Außerdem können aufgrund der geringen Divergenz kleinere optische Komponenten verwendet werden, was wiederum einen Beitrag zur möglichen Miniaturisierung der erfindungsgemäßen Detektorvorrichtung leistet.

Nachfolgend wird ein Herstellungsverfahren für den zuvor beschriebenen oberflächenemittierenden Halbleiterlaser beschrieben. Ein n+ dotiertes Galliumarsenidsubstrat wird in einer Vorrichtung zur Molekularstrahlepitaxie oder zur metallorganischen Gasphasenepitaxie vorgesehen. Auf der (100)-Oberfläche des Galliumarsenidsubstrats wird der rückseitige Bragg-Spiegel aus abwechselnden Viertelwellenlängenschichten aus AlAs und Al_{0,3}Ga_{0,7}As mit 40 Schichtfolgen gebildet. Anschließend im gleichen Arbeitsvorgang eine Al_{0,3}Ga_{0,7}As-Schicht mit der Dicke einer Wellenlänge als aktiver Bereich gebildet, in der drei 8 nm dicke Al_{0,12}Ga_{0,88}As Potentialtöpfe enthalten sind, die durch 6 nm dicke Barrieren getrennt sind. Immer noch im gleichen Arbeitsgang wird anschließend der obere, oberflächenseitige Bragg-Spiegel mit 25 Schichtfolgen, die den Schichtfolgen des rückseitigen Bragg-Spiegels entsprechen, abgelagert.

Die Ablagerung zur Bildung der Bragg-Spiegel wird dabei so gesteuert, daß über einen Bereich von 20 nm ein linearer stöchiometrischer Übergang in der Zusammensetzung nebeneinanderliegender Schichten auftritt. Während des Wachsens des substratseitigen Schichtstapels wird Silangas, das in Wasserstoffgas verdünnt ist, eingespeist, um zur Erzielung einer Leitfähigkeit der Schichten eine n-Dotierung zu schaffen. Um andererseits Absorptionsverluste außerhalb des aktiven Bereichs zu minimieren, wird die Silaneinspeisung und damit die Anzahl von freien Ladungsträgern beim Wachsen der Schichten an den Stellen verringert, an denen eine hohe optische Intensitätsverteilung des bei Laserbetrieb auftretenden stehenden Wellenmusters vorliegt. Die Dotierstoffkonzentration schwankt dabei ungefähr zwischen 1 x 10¹⁸/cm³ und 2 x 10¹⁸/cm³. Der oberflächenseitige Bragg-Spiegel wird beispielsweise durch Einspeisung von Bis(Cyklopentadienyl) Magnesium (Cp₂Mg) p-dotiert, beispielsweise mit einer Konzentration von 3 x 10¹⁸/cm³, wobei das Dotierprofil ebenfalls wie bei der n-Dotierung moduliert wird. Zuletzt wird als oberste Schicht eine dünne p+ dotierte Galliumarsenidkontaktschicht abgelagert.

Nachdem der Wafer, der über seiner gesamten Oberfläche die abgelagerte Stapelschichtstruktur aufweist, aus der Epitaxievorrichtung entnommen wurde, wird die Rückseite des Substrats mit einem Metallkontakt, beispielsweise aus einer Schichtfolge aus Gold, Germanium und Nickel bedampft. Nach dem Aufdampfen des Rückseitenkontakts wird die Struktur bei 430°C für 30 Sekunden einem Anneal-Prozeß ausgesetzt. Anschließend wird das Substrat wird zur Bildung einer oder mehrerer diskreter oberflächenemittierender Lasereinheiten mit lithographischen Verfahren bearbeitet. Unter geeigneter Maskierung wird zuerst eine Trockenätzung in einem reaktiven lonenätzer in einem SiCl₄ Plasma vorgenommen. Dabei wird eine Mesaätzung ausgeführt, d.h. unter Belassung eines säulenförmigen Bereichs, der den oberflächenemittierenden Halbleiterlaser bestimmt, wird das umgebende Substrat zurückgeätzt. Das Trockenätzverfahren wird nach Wegätzen der obersten Galliumarsenidschicht und mindestens einer Aluminiumarsenidschicht unterbrochen, woraufhin ein Naßoxidationsverfahren oder Naßätzverfahren z.B. in verdünnter HF-Säure unter lateralem Anätzen der Aluminiumarsenidschicht ausgeführt wird. Dadurch läßt sich eine weitere Verbesserung in dem lateralen Stromeinschluß in der oberflächenemittierenden Halbleiterlaserstruktur erzielen.

Der laterale Stromeinschluß läßt sich zusätzlich durch ein Verfahren mit selektiver Schichtoxidation verbessern, wobei eine oder mehrere Schichten mit erhöhter Ätzgeschwindigkeit in dem Schichtstapel des oberflächenseitigen Bragg-Spiegels vorgesehen sein können. Beispielsweise wäre es für ein derartiges selektives Naßoxidationsverfahren möglich, im oberflächenseitigen Bragg-Spiegel eine Schichtfolge aus abwechselnden Viertelwellenlängenschichten aus Al_{0,9}Ga_{0,1}As und Al_{0,3}Ga_{0,7}As zu bilden, wobei zur Schaffung einer Schicht mit erhöhtem anisotropem Ätzverhalten eine der Al_{0,9}Ga_{0,1}As-Schichten durch eine AlAs-Schicht ersetzt ist. Damit wäre es möglich, an einer durch die AlAs-Schicht, die ein im Vergleich zu den übrigen Schichten erhöhtes anisotropes Ätzverhalten aufweist, bestimmten tieferliegenden Stelle des oberflächenseitigen Bragg-Spiegels den Strompfad durch Zurückätzen dieser Schicht einzuengen, so daß ein zusätzlich verbesserter Stromeinschluß und damit eine erhöhte Umwandlungseffizienz erhalten wird.

Anschließend wird das Trockenätzverfahren unter den anfänglichen Bedingungen fortgeführt, bis eine ca. 3,5 µm hohe Lasersäule mit Durchmessern zwischen 5 und 50 µm hergestellt ist. Dabei wird die Mesaätzung vorzugsweise nur im Bereich des oberen Bragg-Spiegels durchgeführt. Zur elektrischen Isolierung wird auf der Oberseite des oberflächenemittierenden Halbleiterlasers unter Maskierung mit einem Fotolack ein etwa 1 nm dicker Siliziumnitritfilm über den gesamten Wafer mittels plasmaverstärkter chemischer Gasphasenabscheidung gebildet. Anschließend werden die Kontaktfenster, die gleichzeitig auch die Lichtaustrittsfenster des oberflächenemittierenden Halbleiterlasers bestimmen, durch reaktives lonenätzen des Si₃N₄-Films in einem CF₄-Plasma gebildet. Zuletzt werden nicht legierte Platin-Titan-Platin-Gold-Kontakte aufgedampft, wobei das spätere Laseremissionsfenster mit Fotolack maskiert ist und ein Kontaktbereich zwischen dem Fotolack und der Siliziumnitritschicht besteht, an dem das Kontaktmetall mit der p-dotierten obersten Galliumarsenidschicht in Kontakt steht. Dieser Kontaktbereich ist ringförmig mit einer Breite von ca. 1-2 µm.

Während des Aufdampfens des oberseitigen Metallkontakts wird das Substrat bezüglich der Aufdampfquelle leicht gekippt und gedreht, um an den Flanken der Mesastruktur eine gute Bedeckung mit dem abgelagerten Metall zur verbesserten Wärmeabfuhr bei Betrieb des oberflächenemittierenden Halbleiterlasers zu erzielen.

Mittels bekannter Bondingverfahren wird zwischen den Kontakten auf der Oberseite und der Rückseite des Substrats eine Verbindung zu den entsprechenden Anschlüssen einer geeigneten Ansteuerschaltung, die auf einem anderen Chip integriert sein kann, hergestellt. Andererseits wäre es ebensogut möglich, die Ansteuerschaltung auf demselben Chip, auf dem auch der oberflächenemittierende Halbleiterlaser gebildet wird, zu integrieren.

Das oben beschriebene Verfahren zeichnet sich durch seine relative Einfachheit aus, wodurch eine im Vergleich zu den bisher üblichen kantenemittierenden Halbleiterlasern vereinfachte und verbilligte Herstellung und somit eine Verbesserung in der Eignung zur Massenproduktion der erfindungsgemäßen optischen Detektorvorrichtung geschaffen wird. Außerdem wird dadurch ermöglicht, den oberflächenemittierenden Halbleiterlaser vor Einbau in die Detektionsvorrichtung auf dem Chip zu testen und zu charakterisieren. Dadurch können mangelhafte oder fehlerhaft hergestellte Module ausgeschieden werden, bevor die zeit- und kostenaufwendigen Verfahren zum Anbringen der Elemente an dem Träger für die Halbleiterlaser, deren Verdrahtung und ein anschließendes Packaging durchgeführt werden.

Bei dem oberflächenemittierenden Halbleiterlaser ist es möglich, die Wellenlänge des Emissionslichts über einen gewissen Wellenlängenbereich, beispielsweise 2 nm, durch Veränderung des Ansteuerungsstroms des oberflächenemittierenden Halbleiterlasers durchzustimmen. Der oberflächenemittierenden Halbleiterlaser kann ein Emissionsfenster mit 4 µm Radius aufweisen. Die Wellenlänge nimmt bei dem oberflächenemittierenden Halbleiterlaser um 0,31 nm linear für jede Erhöhung des Treiberstroms um 1 Milliampere zu. Eine Erhöhung bzw. Erniedrigung des Ansteuerungsstroms verursacht eine entsprechend erhöhte oder verringerte, in Wärme umgewandelte Verlustleistung in dem oberflächenemittierenden Halbleiterlaser, wobei durch die Temperaturerhöhung bzw. -erniedrigung über die entsprechende Veränderung des Brechungsindex die optische Resonatorlänge verändert wird, wodurch eine Abstimmbarkeit des oberflächenemittierenden Halbleiterlasers über einen Bereich von mehreren Nanometern erreicht wird.

Dabei ist es bei dem oberflächenemittierenden Halbleiterlaser im Gegensatz zu kantenemittierenden Halbleiterlasern möglich, durch geschickte Lage des Maximums der Verstärkungskurve, relativ zur Wellenlänge der optischen Lichtintensität der sich im aktiven Bereich innerhalb des Resonators aufbauenden stehenden Welle eine trotz Veränderung des Treiberstroms nahezu gleichmäßige optische Ausgangsleistung zu erzielen. Die maximale Lichtausgangsleistung wird dann erzielt, wenn die maximale Verstärkung mit der Wellenlänge der Lichtintensität im optischen Resonator übereinstimmt. Daher kann die Struktur auf geschickte Weise so gestaltet werden, daß bei geringen Ansteuerungsströmen und folglich kurzer Wellenlänge der stehenden Lichtwelle im Resonator ein Maximum der Verstärkung vorliegt. Bei Erhöhung des Ansteuerungsstroms wird nun zwar einerseits die Pumpleistung erhöht, andererseits driftet durch die größere Wellenlänge das Intensitätsmaximum der stehenden Welle von dem Maximum der Verstärkung weg, so daß der Anstieg in Pumpleistung durch eine Verschlechterung in der Verstärkungsausbeute kompensiert wird. Da der oberflächenemittierende Halbleiterlaser aufgrund der kurzen Resonatorlänge nur in einer einzigen Mode anschwingt und der Abstand zur nächsten longitudinalen Mode ca. 100 nm beträgt, ist es innerhalb der relativ schmalbandigen Verstärkungskurve des oberflächenemittierenden Halbleiterlasers nicht möglich, daß bei Wegdriften der Wellenlänge aus dem Maximum der Verstärkungskurve eine andere Mode anschwingt und sich die optische Ausgangsleistung sprunghaft ändert. Bei einem herkömmlichen kantenemittierenden Laser ist dies jedoch möglich, da mehrere longitudinale Moden gleichzeitig anschwingen können und bei einer Veränderung der optischen Weglänge innerhalb des Resonators ein Modensprung auftreten wird, so daß die emittierte Wellenlänge immer an das Maximum der Verstärkungskurve angepaßt ist.

Ein anderes Ausführungsbeispiel ist ein lineares Lichtquellen-Array aus einer Vielzahl von kantenemittierenden Lasern. Das lineare Array aus kantenemittierenden Lasern umfaßt ein längliches Substrat mit einer Vielzahl von kantenemittierenden Lasern, das aus einem fertigprozessierten Chip als Zeile mit einer für den späteren Einsatz gewünschten Dimension herausgebrochen wird. Die in einer dreidimensionalen Darstellung vorneliegende Seite wurde poliert. Die Ausführungsform stellt ein Beispiel für ein Array aus kantenemittierenden Halbleiterlasern dar, wobei es dem Fachmann auf diesem Gebiet der Technik offensichtlich ist, das eine Vielzahl anderer Aufbauten für die kantenemittierenden Laser möglich ist.

In diesem Aufbau ist auf dem Substrat z.B. aus n-GaAs eine untere Mantelschicht (cladding) aus n-AIGaAs aufgebracht, über der sich eine undotierte, aktive wellenleitende Schicht aus GaAs befindet. Über der aktiven wellenleitenden Schicht befindet sich eine obere Mantelschicht aus p-AlGaAs, über der eine Deckschicht (cap) aus p-AIGaAs vorgesehen ist. Zum Stromeinschluß in den entsprechenden einzelnen Laserstrukturen sind unter jeweiligen Elektroden jeweils z.B. Zn-diffundierte Bereiche vorgesehen, die durch die Deckschicht und in die obere Mantelschicht reichen. Zur elektrischen Isolations zur Verhinderung von Übersprechen der einzelnen Laserdioden sind gegebenenfalls Trennimplantationen zwischen den einzelnen kantenemittierenden Lasern vorgesehen. Anstelle der Trennimplantationen wäre es z.B. auch möglich, die einzelnen Halbleiterlaser durch Ätzen zu isolieren. Die Elektroden werden beispielsweise durch herkömmliches Drahtbonden mit einer geeigneten Ansteuerschaltung verbunden. Auf der Rückseite des Substrats ist ein für alle oberflächenemittierenden Halbleiterlaser gemeinsamer Kontakt vorgesehen.

Es werden nachfolgend vier besonders bevorzugte Ausführungsformen der Erfindung beschrieben.

Eine zweite Ausführungsform der Erfindung kann so gestaltet sein, dass oberflächenemittierende Halbleiterlaser, jeweils abwechselnd neben Fotodetektoren auf einem gemeinsamen Substrat integriert sind. Die Anordnung kann selbstverständlich sowohl in einer Richtung als auch senkrecht dazu beliebig oft wiederholt werden. Eine Grenze für die Größe des dadurch erzielbaren Feldes ist im wesentlichen nur durch die Größe der zur Verfügung stehenden Gallium-Arsenid-Substrate gegeben, die derzeit als Wafer mit 2 Zoll Durchmesser (ca. 5 cm) für die Herstellung elektronischer Bauelemente üblich sind.

Das Substrat ist zur justierten Anbringung an einem weiteren zweiten Substrat geeignet ausgebildet. Dazu weisen die beiden Substrate beispielsweise entsprechende Vorsprünge und Ausnehmungen auf. An dem zweiten Substrat sind an den den oberflächenemittierenden Halbleiterlasern gegenüberliegenden Positionen optische Strahlführungselemente vorgesehen, die die von den oberflächenemittierenden Halbleiterlasern emittierten Strahlen geeignet ablenken, damit diese auf an der anderen Oberfläche des zweiten Substrats entsprechend angebrachte korrespondierende Strahlführungskomponenten treffen. Die korrespondierenden Strahlführungskomponenten lenken die Strahlen zu entsprechenden, auf einem weiteren dritten Substrat vorgesehenen Einkoppelgittern. Die durch die Einkoppelgitter in die Wellenleiter eingekoppelten Strahlen breiten sich unter mehrfacher Totalreflexion innerhalb des Wellenleiters zu jeweiligen Auskoppelgittern aus, über die das Licht ausgekoppelt wird und auf Strahlführungskomponenten, die auf dem zweiten Substrat angeordnet sind, trifft. Die letztgenannten Strahlführungskomponenten leiten die entsprechenden Strahlen zu korrespondierenden Strahlführungskomponenten, die den Fotodetektoren auf dem ersten Substrat gegenüberliegen.

Die Ausführungsform kann eine Flußzelle für das über die Sensorelemente streichende Fluid umfassen.

Durch die Strahlführungskomponenten auf den beiden Oberflächen des zweiten Substrats ist es möglich, eine Aufweitung der Strahlendichte von einer hohen Dichte auf der Seite des Felds aus oberflächenemitierenden Lasern und Fotodioden zu einer niedrigen Dichte auf der Seite des Wellenleiters zu erzielen. Dadurch ist es möglich, zur sparsamen Verwendung des relativ teuren Galliumarsenidsubstrats eine hohe Integrationsdichte der oberflächenemittierenden Laser und der zugeordneten Fotodioden auf dem Galliumarsenidwafer vorzusehen, unter Aufrechterhaltung von relativ großen Sensorflächen zur Erzielung einer hohen Empfindlichkeit.

Die Strahlführungskomponenten auf dem zweiten Substrat sind vorzugsweise als Fresnel-Linsen ausgebildet, die beispielsweise durch dem Fachmann bekannte Prägeverfahren relativ einfach erstellbar sind. Die Ein- und Auskoppelgitter lassen sich ebenfalls auf einfache Weise durch dem Fachmann bekannte Verfahren, z.B. Ätzen oder Prägen, auf dem Substrat replizieren.

Das erste und das zweite Substrat, auf dem die Ein- und Auskoppelgitter vorgesehen sind, weisen jeweils wieder geeignete mechanische Mittel zum justierten Zusammenfügen der beiden Substrate auf. Über den Wellenleiterschichten sind Sensorschichten vorgesehen, in denen jeweils ein bestimmtes, für einen nachzuweisenden Analyten geeignetes Erkennungselement immobilisiert sein kann.

Die gegenseitige Ausrichtung der Substrate wird durch die Verwendung von sogenannten Selbstausrichtverfahren bei der Herstellung der Substrate wesentlich verbessert. Dabei werden zur Erzielung einer Zwangsausrichtung von aneinander angrenzenden Oberflächen nebeneinanderliegender Substrate jeweils gleiche Masken zur Strukturierung der Oberflächen oder zur Anbringung von Marken auf diesen Oberflächen verwendet. Beispielsweise kann durch Verwendung eines positiven Fotoresists auf der Oberfläche des einen Substrats und einen negativen Fotoresists auf der Oberfläche des anderen Substrats, Belichtung beider Fotoresists auf den jeweiligen Substraten unter Verwendung der gleichen Maske, Entwicklung der Resists und nachfolgendes Ätzen einer lokalen Vertiefung (Positiv-Resist) aud der einen Oberfläche und einer genau entsprechende Erhebung durch Mesaätzen (Negativ-Resist) auf der anderen Oberfläche eine Justierstruktur erzeugt werden. Anstelle der Verwendung komplementärer Resistsysteme sind auch andere Verfahren denkbar, so z.B. eine Ablagerung auf einer durch den Resist maskierten Oberfläche des einen Substrats und ein Ätzschritt auf der durch den Resist markierten Oberfläche des anderen Substrats. Unter derartigen Selbst- bzw. Zwangsausrichtverfahren ist es denkbar, Anschlagkanten, V-Nuten oder Führungsstifte auf einem Substrat unter Ausbildung jeweils geeigneter komplementärer Strukturen auf dem anderen Substrat vorzusehen. Durch die Möglichkeit, lithographische Verfahren unter Verwendung der gleichen Maske zur Schaffung der Ausrichtstrukturen zu verwenden, wird eine äußerst präzise und einfache Zwangsausrichtung der einzelnen Substrate zueinander geschaffen.

Die zuvor beschriebene Ausführungsform besitzt neben der verbesserten optischen Emissionslichtquelle in Form des oberflächenemittierenden Lasers auch den Vorteil eines modularen Aufbaus mittels der Vielzahl von planaren Substraten, die auf einfache Weise justiert übereinander stapelbar sind. Somit kann zur schnellen Durchführung von Messungen jeweils die oberste Lage, die die Sensorschichten enthält, nach Verbrauch durch eine Messung entfernt und durch eine neue Lage mit geeignet gewählten Sensorschichten ersetzt werden.

Die zuvor beschriebene Ausführungsform weist den Vorteil eines sehr kompakten Sende/Empfänger-Moduls auf, wobei die laterale Lageanordnung aller Laser und Fotodetektoren durch einen gemeinsamen Lithographieprozeß sehr präzise festgelegt werden kann. Durch die hohe Integrationsdichte auf dem ersten Substrat wird platzsparend mit dem relativ teuren Substratmaterial Gallium-Arsenid umgegangen. Während in der zuvor beschriebenen Ausführungsform nur jeweils oberflächenemittierende Halbleiterlaser und zwei entsprechende Fotodetektoren aufgezeigt sind, so ist offensichtlich, daß ein wesentlich größeres Feld jederzeit herstellbar ist. Wiederholabstände im Bereich von 200 µm für aufeinanderfolgende oberflächenemittierende Halbleiterlaser sind derzeit praktisch realisierbar.

Eine dritte Ausführungsform der erfindungsgemäßen optischen Detektorvorrichtung wird nachfolgend beschrieben.

Die dritte Ausführungsform unterscheidet sich von der zuvor beschriebenen zweiten Ausführungsform dadurch, daß einerseits die oberflächenemittierenden Halbleiterlaser und die Fotodetektoren auf getrennten Substraten vorgesehen sind. Zur Zuordnung des Emissionslichts zu den Einkoppelgittern und des aus den Wellenleitern über die Auskoppelgitter ausgekoppelten Lichts zu den entsprechenden Fotodetektoren ist, anstelle eines Substrats mit eine Strahlausweitung bewirkenden zugeordneten Komponenten auf dessen erster und zweiter Oberfläche, nunmehr eine Strahlführung mit Lichtwellenleitern für das von den Lasern emittierte Licht und mit Lichtwellenleiter für das zu den Fotodetektoren geleitete Licht vorgesehen. Das Substrat weist an den den Einkoppelgittern und den den Auskoppelgittern jeweils gegenüberliegenden Stellen strahlkollimierende Elemente auf. An den den strahlkollimierenden Elementen entsprechenden Stellen auf der gegenüberliegenden Seite des Substrats sind Vorrichtungen zum Anschluß der Enden der optischen Fasern vorgesehen.

Durch die Verwendung von Glasfasern zur Zu- und Ableitung des Lichts zwischen den an die Sensorschichten grenzenden Wellenleitern und den oberflächenemittierenden Lasern bzw. den Fotodetektoren ist eine Ausrichtung der einzelnen optischen Elemente auf den jeweiligen Substraten unproblematisch. Weiter sind Feldgrößen im Bereich von 1.000 bis 10.000 Elemente möglich. Außerdem kann das Feld aus Fotodetektoren auf dem leichter handhabbaren und in größeren Substratgrößen zur Verfügung stehenden Siliziumsubstraten ausgebildet werden. Bei dieser Ausführungsform kommt die gute Strahlqualität der oberflächenemittierenden Halbleiterlaser zur Geltung, die zu einer hohen Einkoppeleffizienz in die optischen Fasern führt. Durch die Verwendung von Glasfasern in dieser Ausführungsform wird die Ausrichtung der Halbleiterlaser und der Fotodioden zu den für die Messung verwendeten Wellenleitern vereinfacht, da nur ein einziger Justierschritt bei der Anbringung der Wellenleiter an den fotoelektrischen Komponenten erforderlich ist. Außerdem ist die Einkoppeleffizienz aus den oberflächenemittierenden Halbleiterlasern in die Lichtwellenleiter sehr hoch, da die Einkoppelflächen der Lichtwellenleiter nahezu parallel den Lichtaustrittsflächen der oberflächenemittierenden Halbleiterlasern gegenüberliegen.

Die Verwendung von Faseroptik gemäß der dritten Ausführungsform schafft weiter den Vorteil, daß ein geringes Übersprechen zwischen den einzelnen optischen Wegen der jeweiligen Meßstrecken auftritt. Außerdem wird ein flexibleres Design der optischen Detektorvorrichtung ermöglicht, da eine relativ weite räumliche Trennung von Elektrooptik und Meßzelle möglich ist.

Nachfolgend wird eine vierte Ausführungsform der erfindungsgemäßen optischen Detektorvorrichtung beschrieben.

In der vierten Ausführungsform sind die oberflächenemittierenden Halbleiterlaser und die Fotodetektoren jeweils auf eigenen Substraten vorgesehen. Die Substrate sind jedoch nicht nebeneinander, sondern übereinanderliegend angeordnet, wodurch es erforderlich ist, daß das über dem die oberflächenemittierenden Laser tragenden Substrat angeordnete Substrat Durchgangsöffnungen, sogenannte Via-Löcher aufweist, die einen Durchtritt der von dem oberflächenemittierenden Lasern emittierten Lichtstrahlen zu den kollimierenden optischen Elementen ermöglichen. Zur ausgerichteten und zerstörungsfreien Anbringung des untersten Substrats an das darüber liegende Substrat sind Abstands- und Justiervorrichtungen an dem untersten Substrat vorgesehen, die wieder durch Selbstausrichtverfahren hergestellt sein können. Außerdem weist das die kollimierenden optischen Elemente tragende Substrat Vorsprünge auf, die zu einer justierten Verbindung der Substrate dienen.

Diese vierte Ausführungsform weist den Vorteil einer relativ einfachen Justierung der elektrooptischen und passiven optischen Elemente zueinander auf. Außerdem ist lediglich eine relativ einfache Optik in Form von den elektrooptischen Elementen gegenübersitzenden kollimierenden Elementen notwendig. Die gesamte Struktur besitzt einen sehr kompakten und platzsparenden Aufbau.

Nachfolgend wird eine fünfte Ausführungsform der erfindungsgemäßen optischen Detektionsvorrichtung beschrieben.

Die fünfte Ausführungsform unterscheidet sich im wesentlichen von der vierten Ausführungsform dadurch, daß eine "Volumendetektion" durchgeführt wird, d.h. daß das im evaneszenten Feld des Wellenleiters angeregte, aber isotrop abgestrahlte Fluoreszenzlicht gemessen wird. Daher ist es nicht zwingend notwendig, in der fünften Ausführungsform ein Auskoppelgitter vorzusehen. Andererseits ist ein solches Auskoppelgitter jedoch nicht ausgeschlossen, da es insbesondere zur Auskopplung des transmittierten Anregungslichts als Referenzsignal oder zur Bestimmung der Absorption dienen könnte.

In dieser fünften Ausführungsform sind Filter, vorzugsweise Interferenzfilter, jeweils zwischen den Wellenleitern und den zugehörigen Fotodetektoren vorgesehen. Die Lage der Filter zwischen dem Substrat ist lediglich beispielhaft, wobei es dem Fachmann klar ist, daß die Filter an jeder anderen Stelle im Strahlengang zwischen den Wellenleitern und den entsprechenden Fotodioden vorsehbar sind. Die Interferenzfilter sondern das in dem oberen Substrat, dem Wellenleiter und der Sensorschicht in Richtung auf die Fotodiode gestreute Anregungslicht aus und lassen nur die gewünschte Lumineszenzemission durch.

Obwohl die Verwendung von Interferenzfiltern nur in bezug auf die fünfte Ausführungsform dargestellt wurde, so ist dem Fachmann offensichtlich, daß bei Bedarf Interferenzfilter auch in den ersten bis vierten Ausführungsformen der vorliegenden Erfindung vorgesehen werden können.

Die dritte, vierte und fünfte Ausführungsform der Erfindung verwenden getrennte Substrate für das Feld aus Halbleiterlasern und das Feld aus Fotodioden, wodurch es auf vorteilhafte Weise möglich ist, die Fotodioden auf relativ billigen, herkömmlich erhältlichen Siliziumsubstraten vorzusehen. Durch den verminderten Bedarf an relativ teurer Galliumarsenidsubstratfläche können daher die Kosten der erfindungsgemäßen Detektionsvorrichtung weiter verringert werden.

In allen bisher gezeigten Ausführungsformen unter Verwendung eines oberflächenemittierenden Halbleiterlasers ist es prinzipiell möglich, die abgestrahlte Lichtleistung durch den oberflächenemittierenden Halbleiterlaser durch eine unter dem rückseitigen Bragg-Spiegel integrierte Fotodiode zu messen und zu überwachen und für Referenzzwecke zu verwenden. Eine derartige Monitordiode läßt sich einfach bei Herstellung des einzelnen oder des Felds aus oberflächenemittierenden Halbleiterlasern in dem Galliumarsenidsubstrat integrieren.

Schematisch kann der prinzipielle Aufbau eines für chemische Affinitätassays geeigneten Detektorsystems folgendermassen beschrieben werden. Eine oberste Lage, die mit der Meßzelle in Kontakt steht, enthält replizierte, parallel angeordente Polymerstreifen. Die Polymerstrukturen können auch schachbrettartig vorgesehen sein. Die die Polymerstrukturen enthaltende Lage ist als einfach anbringbares und entfernbares Einmalmodul vorgesehen.

Unter dem die Polymerstrukturen enthaltenden Modul ist eine ebenfalls vorzugsweise als entfernbares Einmalmodul ausgebildete Lage mit den Sensorstrukturen, im folgenden Sensorplattform genannt, vorgesehen. Die Sensorplattform umfaßt ein zweidimensionales Feld von Wellenleiterfilmen, vorzugsweise von Wellenleiterfilmen mit hohem Brechungsindex, die auf replizierten Polymerfilmen aufgebaut sind. Weiter sind in dieser Lage vorzugsweise in dem Polymer oder ohne Verwendung des Polymers in dem Substrat vorgesehene Einkoppelgitter vorhanden, und auf der anderen Seite des Substrats können vorzugsweise jedem Sensorelement zugeordnete Mikrolinsen ausgebildet sein.

In der dritten und untersten Lage ist das Anregungs- und Detektionsmodul ausgebildet. Dieses unterste Modul umfaßt ein korrespondierendes Feld aus individuell adressierbaren Halbleiterlasern und entsprechenden Fotodioden.

Mit dieser in ihrem Prinzip veranschaulichten Vorrichtung eines Vielkanalfluoreszenzsensorsystems können "Libraries" analysiert werden, wie sie in der kombinatorischen Chemie verwendet werden. Bei derartigen Libraries werden große Mengen von unterschiedlichen Substanzen (Liganden für Zielmoleküle) synthetisiert. Diese Substanzen werden auf Zufallsbasis durch iterative und automatisierte Festphasensynthese auf den Oberflächen von Polymerkügelchen mit typischen Durchmessern von 50 bis 100 µm synthetisiert. Die im Prinzip veranschaulichte Vielkanalfloureszenzdetektorvorrichtung ist erstmalig in der Lage, eine volle Ausnützung des Potentials derartiger Libraries in der kombinatorischen Chemie zur Verringerung der Entwicklungszeiten im Verfahren zum Entdecken neuer Pharmazeutika aufgrund der erhöhten Bearbeitungsgeschwindigkeit und der Vielkanalmöglichkeiten im Bereich von 1.000 bis 10.000 parallelen Kanälen möglich. Somit ermöglicht ein derartiges System einen extrem hohen Probendurchsatz unter minimalen Raumanforderungen, so daß derartige Libraries oder Assays der kombinatorischen Chemie möglich und praktikabel werden.

Zur Verwendung als chemischer Sensor sind auf der Sensorplattform vorzugsweise ein oder mehrere spezifische Bindungspartner als chemische oder biochemische Erkennungselemente für einen oder mehrere, gleiche oder verschiedene Analyten selektiv immobilisiert. Es können verschiedene spezifische Bindungspartner auf der Oberfläche eines Wellenleiters aufgebracht sein, wobei deren räumliche Trennung auf einem entsprechenden Wellenleiter unerheblich ist. Beispielsweise können die verschiedenen Bindungspartner als statisches Gemisch auf dem Wellenleiter vorliegen. Dies ist insbesondere dann von Vorteil, wenn Analyten mit verschiedenen Emissionswellenlängen gleichzeitig über ein Auskoppelgitter bestimmt werden sollen.

Die spezifischen Bindungspartner können z.B. durch fotochemische Vernetzung an verschiedenen Stellen auf den Wellenleitern immobilisiert werden, wie dies beispielsweise in der WO 94/27137 beschrieben ist. Ein anderes Verfahren besteht darin, mittels eines Mehrfachpipettenkopfes die zu immobilisierenden spezifischen Verbindungspartner aufzutropfen. Dies kann auch mit einem modifizierten Tintenstrahldruckkopf mit piezoelektrischen Aktoren geschehen. Dies hat zum Vorteil, daß das Verfahren rasch durchführbar ist und sehr kleine Volumina einsetzbar sind. Dies ist eine Vorraussetzung zur Herstellung dünner Streifen oder sonstiger feinstrukturierter geometrischer Muster.

Es ist jedoch besonders bevorzugt, bei der Sensorplattform auf der Oberfläche eines einzelnen Wellenleiters jeweils nur einen spezifischen Bindungspartner anzuordnen.

Eine bevorzugte und sehr einfach durchzuführende Methode zur räumlich getrennten Immobilisierung der spezifischen Bindungspartner auf den Wellenleitern basiert auf der Verwendung einer Flußzelle, wobei die Trennung in der Flußzelle entweder mechanisch, in Form von trennenden Stegen, oder fluidisch bei laminarem Fluß vorgenommen werden kann. Dabei entspricht die geometrische Anordnung der die Bindungspartner heranführenden Teilströme im wesentlichen der Anordnung der wellenleitenden Bereiche auf der Sensorplattform. Dieses Verfahren det Immobilisierung mittels einer Flußzelle ist besonders dann von Vorteil, wenn die spezifischen Bindungspartner in eine Umgebung eingebettet werden sollen, welche nur im flüssigen Medium stabil ist, wie dies beispielsweise bei lipidmembrangebundenen Rezeptoren der Fall ist. Insbesondere können auf diese Weise kovalent an Goldkolloide gebundene spezifische Bindungspartner abgeschieden werden, beispielsweise durch Abscheidung aus wässrigen chemischen Lösungen. Dabei wird der Wellenleiter mit räumlich oder fluidisch getrennten laminaren Teilströmen einer kolloidalen Goldlösung überströmt, wobei die Goldpartikel z.B. in Form von Streifen abgeschieden werden.

Eine weitere und ebenfalls einfach durchzuführende Methode zum Vorsehen der spezifischen Bindungspartner auf den Wellenleitern basiert auf dem Stempeln der Oberfläche der Wellenleiter mit an Gold gebundenen, spezifischen Bindungspartnern. Das Stempeln erfolgt durch sog. "Mikrokontakt-Printing" mittels elastomerer Stempel mit einem gewünschten Strukturierungsprofil, die die kolloidale Goldlösung aufsaugen und durch Auflegen des Stempels auf den Wellenleiter übertragen. Als bevorzugte räumlich getrennte Muster sind Streifen, Rechtecke, Kreise, Ellipsen oder Schachbrettmuster vorgesehen.

Weiter ist es besonders vorteilhaft, zwischen den Wellenleitern und den immobilisierten spezifischen Bindungspartnern eine Haftvermittlungsschicht vorzusehen. Zur Erzielung einer besseren Haftung ist es vorteilhaft, vor der Abscheidung der Goldkolloide die Oberfläche des Wellenleiters geeignet zur Erzielung einer erhöhten Haftfähigkeit zu behandeln. Die Haftungsverbesserung kann durch hydrophobe Wechselwirkung, Van der Vaal-Kräfte, Dipol-Dipol-Wechselwirkung, einfache elektrostatische Wechselwirkung oder kovalente Bindung erreicht werden. Die Wechselwirkung kann ebenfalls durch Funktionalisierung der Kolloide und/oder der Oberfläche der wellenleitenden Schicht hergestellt werden. Eine geeignete Methode zur Modifizierung der Oberfläche des Wellenleiters und zur Verbesserung der Haftung der Goldkolloide besteht z.B. in der Silanisierung der Wellenleiteroberfläche.

Vorzugsweise beträgt die Dicke der Haftvermittlungsschicht bis zu 50 nm, besonders bevorzugt beträgt sie weniger als 20 nm. Die Haftvermittlungsschichten können selektiv mit naßchemischen Verfahren beispielsweise unter Verwendung von Mehrfachpipettenköpfen, einem Tintenstrahldrucker, Flußzellen mit mechanischer und fluidischer Trennung der Ströme, Abscheidung von Kolloiden oder Stempeln der Oberfläche nur auf den Wellenleitern aufgetragen werden. Bei ganzflächiger Auftragung der Haftvermittlungsschichten kann eine Passivierung auch beispielsweise mittels fotochemischer Behandlung auf den die Wellenleiter umgebenden Bereichen stattfinden.

Die direkte oder über Haftvermittlungsschichten vermittelte, selektive Immobilisierung der spezifischen Erkennungselemente ausschließlich auf den wellenleitenden Bereichen kann bei Verwendung einer sowohl die Wellenleiter wie nichtwellenleitende Bereiche überdeckenden Probenzelle zu einer Verbesserung der Empfindlichkeit des Nachweisverfahrens führen, da die unspezifische Bindung des Analyten in den nicht zur Signalerzeugung genutzten Bereichen herabgesetzt wird.

Die Sensorplattform ist bevorzugt ganz oder teilweise regenerierbar und kann mehrmals verwendet werden. Unter geeigneten Bedingungen, beispielsweise tiefer pH, erhöhte Temperatur, unter Anwendung organischer Lösungsmittel oder bei Einsatz sog. chaotroper Reagenzien (Salze) können die Affinitätskomplexe selektiv dissoziiert werden, ohne die Bindungsfähigkeit der immobilisierten Erkennungselemente wesentlich zu beinträchtigen. Die genauen Bedingungen sind stark abhängig von dem jeweiligen Affinitätssystem.

Eine spezifische Ausführungsform des Lumineszenznachweises in einem Assay besteht darin, daß man die zum Nachweis des Analyten benutzten lumineszenzfähigen Stoffe direkt an der Oberfläche der Wellenleiter immobilisiert. Es kann sich dabei z.B. um mehrere an ein Protein gebundene Luminophore handeln, die auf diese Weise an der Oberfläche der Wellenleiter zur Lumineszenz angeregt werden können. Werden für die Proteine affine Partner über diese immobilisierte Schicht geleitet, so kann dadurch die Lumineszenz verändert und auf diese Weise die Menge der affinen Partner bestimmt werden.

Insbesondere können auch beide Partner eines Affinitätskomplexes mit Luminophoren markiert sein, um beispielsweise Konzentrationsbestimmungen anhand des Energietransfers zwischen den beiden, etwa in Form von Lumineszenzlöschung, vorzunehmen.

Eine andere bevorzugte Ausführungsform der Immobilisierung für chemische oder biochemische Affinitätsassays besteht darin, daß man auf der Oberfläche der Sensorplattform einen oder mehrere spezifische Bindungspartner als chemische oder biochemische Erkennungselemente für die Analyten selbst oder für einen Bindungspartner immobilisiert. Dabei kann es sich um ein oder mehrstufige Assays handeln, in deren Verlauf in aufeinanderfolgenden Schritten eine oder mehrere Lösungen mit spezifischen Bindungspartnern für die auf der Oberfläche der Sensorplattform immobilisierten Erkennungselemente geführt werden, wobei die Analyten in einem der Teilschritte gebunden werden. Der Nachweis der Analyten erfolgt dabei durch Bindung von lumineszenzfähig markierten Teilnehmern der Affinitätsassays. Bei den dabei eingesetzten lumineszenzmarkierten Stoffen kann es sich um einen oder mehrere beliebige Bindungspartner der Affinitätsassays handeln oder auch um einen mit einem luminophoren versehenen Analogen der Analyten. Voraussetzung ist lediglich, daß die Anwesenheit der Analyten selektiv zu einem Lumineszenzsignal oder selektiv zu einer Änderung der Lumineszenzsignale führt.

Die Immobilisierung der Erkennungselemente kann z.B. durch hydrophobe Adsorption oder kovalente Bindung direkt auf dem wellenleitenden Bereich oder nach chemischer Modifikation der Oberfläche, z.B. durch Silanisierung oder Aufbringung einer polymeren Schicht, erfolgen. Zusätzlich kann zur Erleichterung der Immobilisierung der Erkennungselemente direkt auf dem Wellenleiter eine dünne Zwischenschicht als Haftvermittlungsschicht, z.B. bestehend aus SiO₂, aufgebracht werden. Die Silanisierung von Glas- und Metalloberflächen ist in der Literatur umfangreich beschrieben worden, z.B. in "Advances in Colloid and Interface Science 6", L. Boksänyi, O. Liardon und E. Koväts, (1976) 95 - 137.

Als Erkennungselemente kommen z.B. Antikörper für Antigene, Bindungsproteine für Protein A und G für Immunoglobuline, biologische und chemische Rezeptoren für Liganden, Oligonukleotide und RNA- oder DNA-Einzelstränge für ihre Komplementärstränge, Avidin für Biotin, Enzyme für Enzymsubstrate, Enzymcofaktoren oder Inhibitoren, Lektine für Kohlehydrate in Frage. Welcher der jeweiligen Affinitätspartner auf der Oberfläche der Sensorplattform immobilisiert wird, ist abhängig von der Achitektur des Assays.

Die Assays selbst können sowohl einstufige Komplexierungsprozesse, beispielsweise kompetitive Assays oder auch mehrstufige Prozesse, beispielsweise Sandwich-Assays, sein.

Im einfachsten Fall des kompetitiven Assays wird die Probe, die den Analyten in unbekannter Konzentration sowie eine bekannte Menge einer bis auf eine Lumineszenzmarkierung gleichartigen Verbindung enthält, mit der Oberfläche der Sensorplattform in Kontakt gebracht, wo die lumineszenzmarkierten und unmarkierten Moleküle um die Bindungsstellen an ihren immobilisierten Erkennungselementen konkurrieren. Bei dieser Assaykonfiguration erhält man ein maximales Lumineszenzsignal, wenn die Probe keinen Analyten enthält. Mit steigender Konzentration der nachzuweisenden Substanz werden die zu beobachtenden Lumineszenzsignale niedriger.

In einem kompetitiven Immunoassay braucht nicht unbedingt der Antikörper, sondern es kann auch das Antigen auf der Oberfläche der Sensorplattform als Erkennungselement immobilisiert werden. Generell ist es beliebig, welcher der Partner in chemischen oder biochemischen Affinitätsassays immobilisiert wird. Dieses ist ein prinzipieller Vorteil von auf Lumineszenz basierenden Assays gegenüber Verfahren, wie beispielsweise Oberflächenplasmonenresonanz oder Interferometrie, die auf der Änderung adsorbierter Masse im evaneszenten Feld des Wellenleiters beruhen.

Weiterhin braucht im Falle kompetitiver Assays die Konkurrenz nicht auf Bindungsstellen an der Oberfläche der Sensorplattform beschränkt zu sein. Beispielsweise kann auch eine bekannte Menge eines Antigens an der Oberfläche der Sensorplattform immobilisiert werden, das anschließend mit der Probe in Kontakt gebracht wird, die eine unbekannte, nachzuweisende Menge des gleichen Antigens als Analyten sowie lumineszenzmarkierte Antikörper enthält. In diesem Fall findet die Konkurrenz zwischen an der Oberfläche immobilisierten und in Lösung befindlichen Antigenen um Bindung der Antikörper statt.

Der einfachste Fall eines mehrstufigen Assays ist ein Sandwich-lmmunoassay, bei dem ein primärer Antikörper auf der Oberfläche der Sensorplattform immobilisiert wird. Die Bindung des nachzuweisenden Antigens und des zur Ausführung des Nachweises benutzten, lumineszenzmarkierten sekundären Antikörpers an ein zweites Epitop des Antigens kann sowohl durch aufeinanderfolgende Kontaktierung mit der das Antigen enthaltenden Lösung und einer zweiten, den lumineszenzmarkierten Antikörper enthaltenden Lösung erfolgen, oder nach vorheriger Zusammenführung dieser beiden Lösungen, so daß anschließend der Teilkomplex, bestehend aus Antigen und lumineszenzmarkiertem Antikörper, gebunden wird.

Affinitätsassays können auch weitere zusätzliche Bindungsschritte enthalten. Beispielsweise kann im Fall von Sandwich-lmmunoassays in einem ersten Schritt Protein A auf der Oberfläche der Sensorplattform immobilisiert werden, welches spezifisch Immunoglobuline an ihrem sogenannten F_{c}-Teil bindet, welche dann als primäre Antikörper in einem nachfolgenden Sandwich-Assay dienen. Es gibt eine Vielzahl weiterer Ausführungsformen von Affinitätsassays, beispielsweise unter Verwendung des bekannten Avidin-Biotin-Affinitätssystems. Beispiele von Ausführungsformen von Affinitätsassays finden sich bei J.H. Rittenberg, Fundamentals of Immunoassay, in Development and Application of Immunoassay for Food Analysis, J.H. Rittenberg (Editor), Elsevier, Essex 1990, oder in P. Tijssen, Practice and Theory of Enzyme Immunoassays, R.H. Burdon, P.H. van Knippenberg (Editors), Elsevier, Amsterdam 1985.

Unter Probe wird im Rahmen der vorliegenden Erfindung die gesamte zu untersuchende Lösung verstanden, die eine nachzuweisende Substanz, den Analyt, enthalten kann. Der Nachweis kann in einem ein- oder mehrstufigen Assay erfolgen, in dessen Verlauf die Oberfläche der Sensorschicht mit einer oder mehreren Lösungen kontaktiert wird. Dabei enthält mindestens eine der verwendeten Lösungen einen lumineszenzfähigen Stoff, der detektierbar ist.

Wenn ein lumineszenzfähiger Stoff bereits in der Sensorschicht vorhanden ist, kann die Probe auch frei von lumineszierenden Bestandteilen sein. Die Probe kann weitere Bestandteile enthalten, wie z.B. pH-Puffer, Salze, Säuren, Basen, oberflächenaktive Stoffe, viskositätsbeeinflussende Zusätze oder Farbstoffe. Insbesondere kann eine physiologische Kochsalzlösung als Lösungsmittel verwendet werden. Wenn der lumineszenzfähige Teil selbst flüssig ist, kann auf die Zugabe eines Lösungsmittels verzichtet werden. In diesem Fall kann die Probe bis zu 100 % lumineszenzfähigen Anteil enthalten.

Die Probe kann insbesondere ein biologisches Medium, wie z.B. Eigelb, eine Körperflüssigkeit oder Bestandteile davon, insbesondere Blut, Serum, Plasma oder Urin sein. Darüber hinaus kann es sich um Oberflächenwasser, Lösungen von Extrakten aus natürlichen oder synthetischen Medien, wie Böden oder Pflanzenteilen, Bioprozeßbrühen oder Synthesebrühen handeln. Die Probe kann entweder unverdünnt oder zusätzlich mit einem Lösungsmittel verwendet werden.

Als Lösungsmittel kommen Wasser, wässige Puffer- und Proteinlösungen sowie organische Lösungsmittel in Frage. Als organische Lösungsmittel eignen sich Alkohole, Ketone, Ester und aliphatische Kohlenwasserstoffe. Bevorzugt werden Wasser, wässrige Puffer oder ein Gemisch aus Wasser mit einem mischbaren organischen Lösungsmittel verwendet.

Die Probe kann aber auch im Lösungsmittel nicht lösliche Bestandteile enthalten, wie Pigmentteilchen, Dipergatoren, natürliche und synthetische Oligomere oder Polymere. Sie liegt dann als optisch trübe Dispersion oder Emulsion vor.

Als lumineszierende Verbindungen können Lumineszenzfarbstoffe mit einer Lumineszenz im Wellenlängenbereich von 330 nm bis 1000 nm, wie Rhodamine, Fluoresceinderivate, Cumarinderivate, Distyrylbiphenyle, Stilbenderivate, Phthalocyanine, Naphthalocyanine, Polypyridyl-Rutheniumkomplexe, wie z.B. Tris(2,2'-bipyridyl)rutheniumchlorid, Tris(1,10-phenanthrolin)rutheniumchlorid, Tris(4,7-diphenyl-1,10-phenanthrolin)rutheniumchlorid und Polypyridyl-Phenanzin-Rutheniumkomplexe, Platin-Porphyrin-Komplexe, wie z.B. Octaethyl-Platin-Porphyrin, langlebige Europium-und Terbiumkomplexe oder Cyanin-Farbstoffe verwendet werden. Besonders geeignet für Analysen in Blut oder Serum sind Farbstoffe mit Absorptions- und Emissionswellenlängen im Bereich von 600 bis 900 nm.

Ganz besonders geeignet sind Farbstoffe wie beispielsweise Fluoresceinderivate, die funktionelle Gruppen enthalten, mit denen sie kovalent gebunden werden können, wie z.B. Fluoresceinisothiocyanat. Die bevorzugte Lumineszenz ist die Fluoreszenz.

Die zur Anwendung kommenden Lumineszenzfarbstoffe können auch chemisch an Polymere oder einen der Bindungspartner in biochemischen Affinitätssystemen, z.B. Antikörper oder Antikörperfragmente, Antigene, Proteine, Peptide, Rezeptoren oder ihre Liganden, Hormone oder Hormonrezeptoren, Oligonukleotide, DNA-Stränge und RNA-Stränge, DNA- oder RNA-Analoga, Bindungsproteine wie Protein A und G, Avidin oder Biotin, Enzyme, Enzymcofaktoren oder Inhibitoren, Lektine oder Kohlenhydrate, gebunden sein. Die zuletzt genannte kovalente Lumineszenzmarkierung ist für reversible oder irreversible (bio)chemische Affinitätsassays die bevorzugte Verwendung. Weiterhin können auch lumineszenzmarkierte Steroide, Lipide und Chelatoren zum Einsatz kommen. Speziell für Hybridisierungsassays mit DNA-Strängen oder Oligonukleotiden sind auch interkalierende Lumineszenzfarbstoffe besonders geeignet, insbesondere wenn sie - wie verschiedene Rutheniumkomplexe - bei der Interkalation eine Lumineszenzverstärkung aufweisen. Werden diese lumineszenzmarkierten Verbindungen mit ihren auf der Oberfläche der Sensorplattform immobilisierten Affinitätspartnern in Kontakt gebracht, so läßt sich ihre Bindung leicht anhand der gemessenen Lumineszenzintensität quantitativ bestimmen. Ebenso ist eine quantitative Bestimmung des Analyten durch Messung der Lumineszenzänderung bei Wechselwirkung der Probe mit den Luminophoren möglich, z.B. in Form von Lumineszenzlöschung durch Sauerstoff oder von Lumineszenzverstärkung durch Konformationsänderungen von Proteinen.

## Patentansprüche

1. Optische Detektionsvorrichtung für chemische Mehrfach-Analysen, insbesondere an kleinvolumigen Proben, mit einer Vielzahl von Lichtquellen zum Aussenden von Nachweislicht,
einer entsprechenden Vielzahl von fotoelektrischen Nachweiseinheiten, die jeweils einer entsprechenden Lichtquelle zugeordnet sind, zum Nachweis einer Lichtintensität und zur Umwandlung der Lichtintensität in ein entsprechendes elektrisches Signal, und
wenigstens einer Meßzelle zur Aufnahme einer zu untersuchenden Probe,
wobei zwischen den Lichtquellen und den fotoelektrischen Nachweiseinheiten mehrere an die wenigstens eine Meßzelle gekoppelte optische Wege gebildet werden, dadurch gekennzeichnet, daß
die Lichtquellen eine Vielzahl oberflächenemittierender Halbleiterlaser auf einem gemeinsamen Substrat, oder wenigstens eine Zeilenanordnung von auf einem gemeinsamen Substrat hergestellten kantenemittierenden Halbleiterlasern sind, und die optischen Wege an Meßzellen gekoppelte Wellenleiter umfassen.

2. Vorrichtung nach einem der Anspruch 1, dadurch gekennzeichnet, daß jeder oberflächenemittierende Halbleiterlaser zur Emission von sichtbarem Licht geeignet ausgelegt ist zur Verwendung bei der Fluoreszenzspektroskopie.

3. Vorrichtung nach Anspruch 2, dadurch gekennzeichnet, daß sich wenigstens in Bragg-Spiegel bildenden Bereichen jeden oberflächenemittierenden Halbleiterlasers die stöchiometrische Zusammensetzung von nebeneinanderliegenden Schichten auf kontinuierliche Weise ändert.

4. Vorrichtung nach einem der Ansprüche 1 bis 3, dadurch gekennzeichnet, daß jeder oberflächenemittierende Halbleiterlaser auf einem Substrat gebildet ist und zur lateralen Begrenzung der Lasergröße mittels einer Mesaätzung definiert ist.

5. Vorrichtung nach Anspruch 4, dadurch gekennzeichnet, daß die obere Oberfläche und die Flanken des mesageätzten oberflächenemittierenden Halbleiterlasers unter Freilassung eines Emissionsfenster für die vertikal zur Substratoberfläche gerichtete Lichtemission mit einer Metallschicht bedeckt ist.

6. Vorrichtung nach Anspruch 5, dadurch gekennzeichnet, daß die die Mesastruktur des oberflächenemittierenden Halbleiterlaser bedeckende Metallschicht mit einer elektrischen Kontaktierungsschicht identisch ist.

7. Vorrichtung nach einem der vorhergehenden Ansprüche, dadurch gekennzeichnet, daß jeder Lichtquelle genau eine fotoelektrische Nachweiseinheit und genau ein optischer Weg zugeordnet ist.

8. Vorrichtung nach einem der vorhergehenden Ansprüche, dadurch gekennzeichnet, daß jeder Lichtquelle eine zusätzliche Monitornachweisvorrichtung zur Überwachung der von der Lichtquelle emittierten Lichtintensität ohne Beeinflussung durch den Meßvorgang zugeordnet ist.

9. Vorrichtung nach einem der Ansprüche 1 bis 8, dadurch gekennzeichnet, daß die Halbleiterlaser, die fotoelektrischen Nachweiseinheiten und die durch die Meßzellen führenden optischen Wege jeweils auf einem ersten, zweiten und dritten jeweils im wesentlichen planaren Substrat ausgebildet sind.

10. Vorrichtung nach Anspruch 9, dadurch gekennzeichnet, daß das erste, zweite und dritte Substrat übereinandergestapelt sind.

11. Vorrichtung nach Anspruch 10, dadurch gekennzeichnet, daß das erste, zweite und dritte Substrat jeweils Justierstrukturen zur gegenseitigen Ausrichtung aufweisen.

12. Vorrichtung nach Anspruch 11, dadurch gekennzeichnet, daß die Justierstrukturen unter Verwendung von Selbstausrichtverfahren hergestellt sind.

13. Vorrichtung nach einem der Ansprüche 9 bis 12, dadurch gekennzeichnet, daß auf dem dritten Substrat erste Mittel zur optischen Wegumlenkung vorhanden sind, die das im wesentlichen senkrecht zu dem ersten Substrat von dem Halbleiterlaser emittierte Licht in eine im wesentlichen parallel zur Oberfläche des dritten Substrats verlaufende Richtung zur Wechselwirkung mit der Probe in der Meßzelle umlenken, und daß zweite Mittel vorhanden sind zum Umlenken des Lichts nach Wechselwirkung mit der Probe in Richtung auf die auf dem zweiten Substrat vorgesehenen fotoelektrischen Nachweiseinheiten.

14. Vorrichtung nach einem der Ansprüche 9 bis 12, dadurch gekennzeichnet, daß ein viertes, zwischen dem zweiten und dritten angeordnetes Substrat vorgesehen ist, auf dem jeweils erste und zweite optische Elemente vorhanden sind zum Kollimieren und Ablenken des von den Lasern ausgehenden Lichts und zum Kollimieren und Ablenken des nach der Wechselwirkung mit der Probe auftretenden Lichtes auf die fotoelektrischen Nachweiselemente.

15. Vorrichtung nach einem der vorhergehenden Ansprüche, dadurch gekennzeichnet, daß ein Feld von Halbleiterlasern und ein Feld von fotoelektrischen Nachweiseinheiten vorhanden ist, wobei die Dichte der Anordnung der oberflächenemittierenden Halbleiterlaser größer ist als die Dichte der jeweiligen Wechselwirkungsbereiche.

16. Vorrichtung nach Anspruch 15, dadurch gekennzeichnet, daß Mittel zum Anpassen der Dichte der von den Halbleiterlasern emittierten Lichtstrahlen an die Dichte der Wechselwirkungsbereiche vorhanden sind.

17. Vorrichtung nach Anspruch 16, dadurch gekennzeichnet, daß die Mittel zum Anpassen der Dichte ein entsprechendes Feld von jeweils mit einem Halbleiterlaser zusammenwirkenden Lichtleitfasern umfassen, deren Ausgangsseite im Vergleich zur Eingangsseite entsprechend der Dichte der Wechselwirkungsbereiche aufgespreizt ist.

18. Vorrichtung nach Anspruch 16, dadurch gekennzeichnet, daß die Mittel zum Aufweiten der Dichte ein Feld von jeweils einem Laser zugeordneten ersten optischen Elementen umfaßt, die jeweils die im wesentlichen senkrecht zur Oberfläche des Halbleiterlasers emittierten Lichtstrahlen in eine Richtung ablenken derart, daß die Lichtstrahlen auf das jeweils entsprechende Einkoppelelement zur Einkopplung in den an die Meßzelle gekoppelten optischen Weg treffen.

19. Vorrichtung nach Anspruch 18, dadurch gekennzeichnet, daß jeweils zweite optische Elemente vorhanden sind, um die durch die ersten optischen Elemente aus der Richtung senkrecht zur Oberfläche der Halbleiterlaser ausgelenkten Lichtstrahlen wieder zurückzuführen in eine Richtung im wesentlichen senkrecht zur Oberfläche der Halbleiterlaser.

20. Vorrichtung nach Anspruch 1, dadurch gekennzeichnet, daß auf den Wellenleitern jeweils eine selektiv für einen oder mehrere in der Probe zu untersuchenden Analyten empfindliche Sensorschicht, die an die Meßzelle gekoppelt ist, vorgesehen ist.

21. Verfahren zur parallelen Bestimmung einer oder mehrerer Lumineszenzen, bei dem man eine oder mehrere flüssige Proben mit mehreren Wellenleitern in Kontakt bringt, Anregungslicht in die Wellenleiter einkoppelt, es diese durchlaufen läßt, hierbei die lumineszenzfähigen Stoffe in den Proben oder die auf den Wellenleitern immobilisierten lumineszenzfähigen Stoffe parallel im evaneszenten Feld anregt, und die dadurch erzeugten Lumineszenzen mit den fotoelektrischen Nachweiselementen mißt, dadurch gekennzeichnet, daß man die Einkopplung von Anregungslicht und die Messung der Lumineszensen mit einer Vorrichtung nach Anspruch 20 vornimmt.

22. Verwendung der Detektionsvorrichtung nach einem der Ansprüche 1 bis 20 zur quantitativen Bestimmung von biochemischen Stoffen in der Affinitätssensorik.

## Claims

1. An optical detection device, for multiple chemical analyses especially of small-volume samples, comprising a number of light sources for emitting detection light,
a corresponding number of photoelectric detection units, each associated with a corresponding light source, for detecting a light intensity and converting the light intensity into a corresponding electrical signal, and
at least one measuring cell for holding a sample to be examined,
several optical paths coupled to the at least one measuring cell being formed between the light sources and the photoelectric detection unit(s), **wherein**
the light sources are a number of surface-emitting semiconductor lasers on a common substrate, or at least one linear arrangement of edge-emitting semiconductor lasers produced on a common substrate, and the optical paths include waveguides coupled to measuring cells.

2. A device according to one of claim 1, **wherein** each surface-emitting semiconductor laser is designed to be suitable for emission of visible light for use in fluorescence spectroscopy.

3. A device according to claim 2, **wherein**, at least in regions of each surface-emitting semiconductor laser that form Bragg mirrors, the stoichiometric composition of adjacent layers changes in a continuous manner.

4. A device according to any one of claims 1 to 3, **wherein** each surface-emitting semiconductor laser is formed on a substrate and, for lateral limitation of the laser size, is defined by means of mesa etching.

5. A device according to claim 4, **wherein** the upper surface and the flanks of the mesaetched surface-emitting semiconductor laser are covered by a metal layer leaving an emission window free for the light emission which is oriented perpendicularly to the substrate surface.

6. A device according to claim 5, **wherein** the metal layer covering the mesa structure of the surface-emitting semiconductor laser is identical with an electrical contacting layer.

7. A device according to any one of the preceding claims, **wherein** each light source is associated with exactly one photoelectric detection unit and exactly one optical path.

8. A device according to any one of the preceding claims, **wherein** each light source is associated with an additional, monitoring detection device for monitoring the light intensity emitted by the light source without being affected by the measuring process.

9. A device according to any one of claims 1 to 8, **wherein** the semiconductor lasers, the photoelectric detection units and the optical paths leading through the measuring cells are respectively formed on a first, second and third substrate which is in each case substantially planar.

10. A device according to claim 9, **wherein** the first, second and third substrates are stacked on top of one another.

11. A device according to claim 10, **wherein** the first, second and third substrates each have registration structures for mutual alignment.

12. A device according to claim 11, **wherein** the registration structures are produced using auto-aligning processes.

13. A device according to any one of claims 9 to 12, **wherein**, on the third substrate, first means are present for bending the optical path, which bend the light that is emitted by the semiconductor laser substantially perpendicularly to the first substrate into a direction extending substantially parallel to the surface of the third substrate for interaction with the sample in the measuring cell, and second means are present for bending the light, after interaction with the sample, into the direction towards the photoelectric detection units provided on the second substrate.

14. A device according to any one of claims 9 to 12, **wherein** a fourth substrate, arranged between the second and third substrates, is provided, on which first and second optical elements are present for collimating and bending the light emanating from the lasers and for collimating and bending the light emerging after interaction with the sample onto the photoelectric detection elements.

15. A device according to any one of the preceding claims, **wherein** an array of semiconductor lasers and an array of photoelectric detection units is present, the density of the arrangement of the surface-emitting semiconductor lasers being greater than the density of the relevant interaction regions.

16. A device according to claim 15, **wherein** means for matching the density of the light beams emitted by the semiconductor lasers to the density of the interaction regions are present.

17. A device according to claim 16, **wherein** the means for matching the density comprise a corresponding array of optical fibres each cooperating with one semiconductor laser, the output end of which is spread out in comparison with the input end in accordance with the density of the interaction regions.

18. A device according to claim 16, **wherein** the means for spreading out the density comprise an array of first optical elements which are each associated with one laser and which each bend the light beams that are emitted substantially perpendicularly to the surface of the semiconductor laser into a direction such that the light beams impinge on the respectively corresponding coupling-in element in order to be coupled into the optical path which is coupled to the at least one measuring cell.

19. A device according to claim 18, **wherein** second optical elements are present in order to return the light beams that have been bent out of the direction perpendicular to the surface of the semiconductor lasers by the first optical elements into a direction substantially perpendicular to the surface of the semiconductor lasers.

20. A device according to claim 1, **wherein** there is provided on each waveguide a sensor layer which is coupled to the measuring cell and which is selectively sensitive to one or more of the analytes to be examined in the sample.

21. A method for the parallel determination of one or more luminescences which comprises bringing one or more liquid samples into contact with several waveguides, coupling excitation light into the waveguides, causing the light to pass through the waveguides, thus exciting in parallel in the evanescent field the luminescent substances in the samples or the luminescent substances immobilised on the waveguides, and measuring the luminescences produced thereby using the photoelectric detection elements, **wherein** the coupling of excitation light and the measuring of luminescences are undertaken using a device according to claim 20.

22. The use of the detection device according to any one of claims 1 to 20 for the quantitative determination of biochemical substances in affinity sensing.

## Revendications

1. Dispositif de détection optique pour analyses chimiques multiples, en particulier sur des échantillons de faible volume, comprenant un grand nombre de sources de lumière destinées à diffuser une lumière de mise en évidence,
un grand nombre correspondant d'unités de mise en évidence photoélectriques, qui sont chacune associées à une source de lumière correspondante, pour déceler une intensité lumineuse et pour transformer l'intensité lumineuse en un signal électrique correspondant, et au moins une cellule de mesure destinée à recevoir un échantillon à examiner,
où entre les sources de lumière et les unités de mise en évidence photoélectriques sont formés plusieurs cheminements optiques couplés à la ou les cellules de mesure, caractérisé en ce que
les sources de lumière sont constituées par un grand nombre de lasers à semi-conducteur émettant à la surface, sur un substrat commun, ou par au moins une disposition en ligne de lasers à semi-conducteur émettant aux arêtes, établis sur un substrat conunun, et les cheminements optiques comprennent des guides d'ondes couplés à des cellules de mesure.

2. Dispositif selon la revendication 1, caractérisé en ce que chaque laser à semi-conducteur émettant à la surface est conçu de manière appropriée pour l'émission de lumière visible, en vue d'une utilisation dans la spectroscopie à fluorescence.

3. Dispositif selon la revendication 2, caractérisé en ce qu'au moins dans des régions formant miroir de Bragg de chaque laser à semi-conducteur émettant à la surface, la composition stoechiométrique de couches voisines se modifie de façon continue.

4. Dispositif selon l'une des revendications 1 à 3, caractérisé en ce que chaque laser à semi-conducteur émettant à la surface est formé sur un substrat et est défini, pour la délimitation latérale de la taille du laser, au moyen d'une gravure selon le procédé mesa.

5. Dispositif selon la revendication 4, caractérisé en ce que la surface supérieure et les flancs du laser à semi-conducteur émettant à la surface, qui a subi une gravure selon le procédé mesa, sont recouverts d'une couche métallique, avec libération d'une fenêtre d'émission pour l'émission de lumière dirigée verticalement par rapport à la surface du substrat.

6. Dispositif selon la revendication 5, caractérisé en ce que la couche métallique recouvrant la structure mesa du laser à semi-conducteur émettant à la surface est identique à une couche de contact électrique.

7. Dispositif selon l'une des revendications précédentes, caractérisé en ce qu'à chaque source de lumière sont associés une unité de mise en évidence photoélectrique précise et un cheminement optique précis.

8. Dispositif selon l'une des revendications précédentes, caractérisé en ce qu'à chaque source de lumière est associé un dispositif de mise en évidence de contrôle supplémentaire pour surveiller l'intensité lumineuse émise par la source de lumière, sans influence par le processus de mesure.

9. Dispositif selon l'une des revendications 1 à 8, caractérisé en ce que les lasers à semi-conducteur, les unités de mise en évidence photoélectriques et les cheminements optiques conduisant à travers les cellules de mesure sont respectivement formés sur un premier substrat, un second substrat et un troisième substrat, chacun sensiblement plan.

10. Dispositif selon la revendication 9, caractérisé en ce que le premier, le second et le troisième substrat sont empilés l'un sur l'autre.

11. Dispositif selon la revendication 10, caractérisé en ce que le premier, le second et le troisième substrat présentent des structures d'ajustement respectives pour l'orientation réciproque.

12. Dispositif selon la revendication 11, caractérisé en ce que les structures d'ajustement sont produites moyennant l'utilisation de procédés d'auto-orientation.

13. Dispositif selon l'une des revendications 9 à 12, caractérisé en ce que sont présents sur le troisième substrat, des premiers moyens de changement de direction optique, qui dévient la lumière, émise de façon sensiblement perpendiculaire au premier substrat par le laser à semi-conducteur, dans une direction sensiblement parallèle à la surface du troisième substrat, aux fins d'interaction avec l'échantillon dans la cellule de mesure, et en ce que des seconds moyens sont présents pour dévier la lumière, après interaction avec l'échantillon, en direction des unités de mise en évidence photoélectriques prévues sur le second substrat.

14. Dispositif selon l'une des revendications 9 à 12, caractérisé en ce qu'est prévu un quatrième substrat, disposé entre le second et le troisième, sur lequel sont respectivement présents des premiers et des seconds éléments optiques pour la collimation et la déviation de la lumière sortant des lasers et pour la collimation et la déviation de la lumière apparaissant après l'interaction avcc l'échantillon, sur les éléments de mise en évidence photoélectriques.

15. Dispositif selon l'une des revendications précédentes, caractérisé en ce qu'il est prévu un champ de lasers à semi-conducteur et un champ d'unités de mise en évidence photoélectriques, la densité d'implantation des lasers à semi-conducteur émettant à la surface étant supérieure à la densité des zones d'interaction considérées.

16. Dispositif selon la revendication 15, caractérisé en ce que sont présents des moyens d'adaptation de la densité des rayons lumineux émis par les lasers à semi-conducteur à la densité des zones d'interaction.

17. Dispositif selon la revendication 16, caractérisé en ce que les moyens d'adaptation de la densité comprennent un champ correspondant de fibres optiques coopérant chacune avec un laser à semi-conducteur, et dont la face de sortie est élargie par comparaison avec la face d'entrée dans une mesure correspondant à la densité des zones d'interaction.

18. Dispositif selon la revendication 16, caractérisé en ce que les moyens pour élargir la densité comprennent un champ de premiers éléments optiques associés chacun à un laser, qui dévient respectivement les rayons lumineux émis sensiblement perpendiculairement à la surface du laser à semi-conducteur, dans une direction telle que les rayons lumineux tombent sur l'élément de couplage respectif correspondant pour l'introduction par couplage dans le cheminement optique couplé à la cellule de mesure.

19. Dispositif selon la revendication 18, caractérisé en ce que sont présents des seconds éléments optiques respectifs pour ramener les rayons lumineux, déviés par les premiers éléments optiques de la direction perpendiculaire à la surface des lasers à semi-conducteur, dans une direction sensiblement perpendiculaire à la surface des lasers à semi-conducteur.

20. Dispositif selon la revendication 1, caractérisé en ce qu'est prévue sur chacun des guides d'ondes, une couche capteur sensible sélectivement pour un ou plusieurs analytes à examiner dans l'échantillon, cette couche étant couplée à la cellule de mesure,

21. Procédé de détermination parallèle d'une ou de plusieurs luminescences, selon lequel on met en contact un ou plusieurs échantillons liquides avec plusieurs guides d'ondes, on introduit par couplage une lumière d'excitation dans les guides d'ondes, on la laisse parcourir ces guides d'ondes, on excite ainsi les matières susceptibles de luminescence dans les échantillons ou les matières susceptibles de luminescence immobilisés sur les guides d'ondes, parallèlement dans le champ évanescent, et on mesure les luminescences ainsi produites avec les éléments de mise en évidence photoélectriques, caractérisé en ce qu'on procède à l'introduction par couplage de la lumière d'excitation et à la mesure des luminescences avec un dispositif selon la revendication 20.

22. Utilisation du dispositif de détection selon l'une des revendications 1 à 20 pour la détermination quantitative de matières biochimiques dans les systèmes de capteurs d'affinité.
